# EUROPEAN PATENT APPLICATION

(11) **EP 4 534 870 A1**
(43) Date of publication of application: **09.04.2025**
(21) Application number: 23811410.2
(22) Date of filing: 16.03.2023
(51) Int. Cl.: F16C 41/00, F04D 13/06, F04D 29/00, H02K 11/225, H02P 29/024

(54) **MOTOR BEARING WEAR MONITORING DEVICE, ADJUSTMENT METHOD FOR MOTOR BEARING WEAR MONITORING DEVICE, AND PROGRAM**

(30) Priority: 24.05.2022 JP 2022084769
(71) Applicant: Nikkiso Co., Ltd., Tokyo 150-6022 (JP)
(72) Inventor: TANAKA Takuya, Higashimurayama-shi, Tokyo 189-8520 (JP)
(74) Representative: Mathys & Squire
(86) International application number: PCT/JP2023/010369
(87) International publication number: WO 2023/228529

(57) **Abstract**

A motor bearing wear monitoring device (5; 5A; 5B) monitors a wear state of bearings (32, 33) with a plurality of detection coils (C1 to C8). These coils include a plurality of thrust detection coils (C2, C4, C6, C8). The device includes a wear amount detection unit (543) detecting a wear amount of the bearings in a thrust direction, based on a difference between a combined signal of a set of the thrust detection coils (C2, C4) and a combined signal of another set of the thrust detection coils (C6, C8), a frequency acquisition unit (541, 548) acquiring a driving frequency of a motor (3); a data acquisition unit (542, 549) acquiring adjustment data corresponding to the driving frequency; and an offset processing unit (57) executing offset processing to the combined signal so that the difference indicates a wear amount corresponding to the driving frequency, based on the adjustment data.

## Description

### [Technical Field]

The present invention relates to a motor bearing wear monitoring device, a method for adjusting the motor bearing wear monitoring device, and a program.

### [Background Art]

A canned motor pump has a structure in which a pump and a motor are integrated and handling liquid does not leak. In general, a rotating structure portion of the canned motor pump (a rotor, a rotating shaft, a bearing, and an impeller) is sealed in a can filled with the handling liquid. Thus, the internal structure of the canned motor pump cannot be visually monitored from the outside. Accordingly, in order to efficiently operate the canned motor pump having such a structure, a device for monitoring a wear state of the bearing (hereinafter referred to as "monitoring device") is used (for example, see PTL 1).

The monitoring device (the motor bearing wear monitoring device) disclosed in PTL 1 monitors displacement of the rotor (the rotating shaft) in the radial direction and the axial direction caused by bearing wear by using detection coils attached to both ends of the stator in the longitudinal direction and measuring a change in magnetic flux when the rotor rotates. This method includes zero adjustment to adjust an output of the detection coils so that, when the bearing is not worn, the output of the detection coils indicates that the displacement is zero. The monitoring device detects a voltage induced in the detection coils by the rotation of the motor. Thus, the zero adjustment is performed in a state where the motor is rotated by a predetermined operating condition to be used.

The canned motor pump uses a method of reducing a flow rate by throttling back a valve on piping connected to a discharge side of the canned motor pump. The method increases the resistance of liquid flowing through the piping, resulting in energy loss. In recent years, a method has been used in which a driving condition (for example, a driving frequency) of a motor is changed by an inverter (for example, see PTL 2). In this method, since no energy loss occurs unlike the method of throttling the valve, the adjustment of the flow rate by using this method has become mainstream in recent years.

### [Citation List]

### [Patent Literature]

[PTL 1] JP H10-080103 A
[PTL 2] JP2007-162700 A

### [Summary of Invention]

### [Technical Problem]

However, as described above, the monitoring device measures the change in the magnetic flux when the rotor rotates. Thus, when the driving frequency is changed by the inverter, the voltage induced in the detection coil varies, and technical issues occur such as erroneous detection due to a deviation in a corresponding relation between a measured value and an amount of wear. As a result, manual adjustment of the corresponding relation (zero adjustment) is required every time the driving frequency is changed. In this way, the conventional monitoring device is not able to handle the flow rate control using the inverter without manual operation for the device.

The present invention is directed to providing a motor bearing wear monitoring device, a method for adjusting the motor bearing wear monitoring device, and a program that are capable of maintaining detection accuracy without manual operation for the device even when a driving frequency is changed.

### [Solution to Problem]

A motor bearing wear monitoring device according to one aspect of the present invention is a motor bearing wear monitoring device for monitoring a wear state of bearings that support a rotating shaft of a rotor by detecting a change in magnetic flux corresponding to a mechanical position change of the rotor with respect to a stator of a motor of a canned motor pump by using a plurality of detection coils attached to the stator, in which each of the plurality of detection coils outputs a detection signal indicating the change in the magnetic flux, and the plurality of detection coils include a plurality of thrust detection coils that output the detection signals indicating the change in the magnetic flux in a thrust direction of the rotating shaft, and the motor bearing wear monitoring device includes: a wear amount detection unit that detects an amount of wear of the bearings in the thrust direction, based on a difference between a combined signal obtained by combining each detection signal output from a pair of the thrust detection coils and a combined signal obtained by combining each detection signal output from another pair of the thrust detection coils; a frequency acquisition unit that acquires a driving frequency of the motor; a data acquisition unit that acquires adjustment data corresponding to the driving frequency, based on the acquired driving frequency; and an offset processing unit that executes offset processing to the combined signal used to calculate the difference, based on the acquired adjustment data, in such a way that the difference indicates the amount of wear corresponding to the driving frequency.

A method for adjusting a motor bearing wear monitoring device according to one aspect of the present invention is a method for adjusting a motor bearing wear monitoring device for monitoring a wear state of bearings that support a rotating shaft of a rotor by detecting a change in magnetic flux corresponding to a mechanical position change of the rotor with respect to a stator of a motor of a canned motor pump by using a plurality of detection coils attached to the stator, in which each of the plurality of detection coils outputs a detection signal indicating the change in the magnetic flux, and the plurality of detection coils include a plurality of thrust detection coils that output the detection signals indicating the change in the magnetic flux in a thrust direction of the rotating shaft, and the method for adjusting the motor bearing wear monitoring device includes: a wear amount detection step of detecting, with the motor bearing wear monitoring device, an amount of wear of the bearings in the thrust direction, based on a difference between a combined signal obtained by combining each detection signal output from a pair of the thrust detection coils and a combined signal obtained by combining each detection signal output from another pair of the thrust detection coils; a frequency acquisition step of acquiring, with the motor bearing wear monitoring device, a driving frequency of the motor; a data acquisition step of acquiring, with the motor bearing wear monitoring device, adjustment data corresponding to the driving frequency, based on the acquired driving frequency; and an offset processing step of executing, with the motor bearing wear monitoring device, offset processing to the combined signal used to calculate the difference, based on the acquired adjustment data, in such a way that the difference indicates the amount of wear corresponding to the driving frequency.

A program according to one aspect of the present invention is a program to be executed by a processor included in a motor bearing wear monitoring device for monitoring a wear state of bearings that support a rotating shaft of a rotor by detecting a change in magnetic flux corresponding to a mechanical position change of the rotor with respect to a stator of a motor of a canned motor pump by using a plurality of detection coils attached to the stator, in which each of the plurality of detection coils outputs a detection signal indicating the change in the magnetic flux, and the plurality of detection coils include a plurality of thrust detection coils that output the detection signals indicating the change in the magnetic flux in a thrust direction of the rotating shaft, and the program causes the processor to function as a wear amount detection unit that detects an amount of wear of the bearings in the thrust direction, based on a difference between a combined signal obtained by combining each detection signal output from a pair of the thrust detection coils and a combined signal obtained by combining each detection signal output from another pair of the thrust detection coils; a frequency acquisition unit that acquires a driving frequency of the motor; a data acquisition unit that acquires adjustment data corresponding to the driving frequency, based on the acquired driving frequency; and a data extraction unit that extracts, from the adjustment data, offset information to be used for offset processing to be executed by the combined signals used to calculate the difference in such a way that the difference indicates the amount of wear corresponding to the driving frequency.

### [Advantageous Effects of Invention]

The present invention is able to provide the motor bearing wear monitoring device, the method for adjusting the motor bearing wear monitoring device, and the program, which are capable of maintaining detection accuracy without manual operation for the device even when a driving frequency is changed.

### [Brief Description of Drawings]

[Fig. 1] Fig. 1 is a side view of a canned motor pump.
[Fig. 2] Fig. 2 is a schematic sectional view of a motor unit illustrating a longitudinal section of the motor unit included in the canned motor pump in Fig. 1.
[Fig. 3] Fig. 3 schematically illustrates an enlarged sectional view of a part A of the motor unit in Fig. 2.
[Fig. 4] Fig. 4 is a functional block diagram illustrating an embodiment of the motor bearing wear monitoring device according to the present invention.
[Fig. 5] Fig. 5 is a schematic perspective view illustrating arrangement of detection coils included in the motor bearing wear monitoring device in Fig. 4.
[Fig. 6] Fig. 6 is an enlarged perspective view of a part B in Fig. 5.
[Fig. 7] Fig. 7 is a schematic diagram illustrating an example of a detection signal of the detection coil in Fig. 5.
[Fig. 8] Fig. 8 is a schematic diagram illustrating an example of a configuration of a pulse signal generation unit included in the motor bearing wear monitoring device in Fig. 4.
[Fig. 9] Fig. 9 is a schematic diagram illustrating an example of information stored in a storage included in the motor bearing wear monitoring device in Fig. 4.
[Fig. 10] Fig. 10 is a functional block diagram of a position adjustment unit included in the motor bearing wear monitoring device in Fig. 4.
[Fig. 11] Fig. 11 is a flowchart illustrating an example of an operation of the motor bearing wear monitoring device in Fig. 4.
[Fig. 12] Fig. 12 is a flowchart illustrating an example of frequency acquisition processing included in the operation in Fig. 11.
[Fig. 13] Fig. 13 is a flowchart illustrating an example of adjustment processing included in the operation in Fig. 11.
[Fig. 14] Fig. 14 is a schematic diagram illustrating an example of a combined signal before offset processing to be executed in the adjustment processing in Fig. 13.
[Fig. 15] Fig. 15 is a schematic diagram illustrating an example of a combined signal after the offset processing to be executed in the adjustment processing in Fig. 13.
[Fig. 16] Fig. 16 is a flowchart illustrating an example of wear amount detection processing included in the operation in Fig. 11.
[Fig. 17] Fig. 17 is a flowchart illustrating an example of rotating direction detection processing included in the operation in Fig. 11.
[Fig. 18] Fig. 18 is a schematic diagram illustrating a principle for detecting a rotating direction in a rotating direction detection unit included in the motor bearing wear monitoring device in Fig. 4.
[Fig. 19] Fig. 19 is a functional block diagram illustrating another embodiment of the motor bearing wear monitoring device according to the present invention.
[Fig. 20] Fig. 20 is a flowchart illustrating an example of a frequency acquisition processing to be executed by the motor bearing wear monitoring device in Fig. 19.
[Fig. 21] Fig. 21 is a functional block diagram illustrating still another embodiment of the motor bearing wear monitoring device according to the present invention.
[Fig. 22] Fig. 22 is a flowchart illustrating an example of an adjustment processing to be executed by the motor bearing wear monitoring device in Fig. 21.

### [Description of Embodiments]

The present invention enables a motor bearing wear monitoring device for a canned motor pump to include a function of automatically acquiring a driving frequency, a function of automatically acquiring adjustment data corresponding to the driving frequency, and a function of automatically executing offset processing depending on the driving frequency, based on the adjustment data, thereby maintaining detection accuracy without manual operation for the device even when the driving frequency is changed, and allowing an inverter to control flow rate in the motor bearing wear monitoring device. Detail of each term will be described later.

Embodiments of a motor bearing wear monitoring device according to the present invention (hereinafter referred to as "present device"), a method for adjusting the motor bearing wear monitoring device (hereinafter referred to as "present method"), and a program (hereinafter referred to as "present program") will be described below with reference to the drawings. In the drawings, the same members and components are indicated with the same reference signs, and repetitive description thereof will be omitted.

### Canned Motor Pump

### Configuration of Canned Motor Pump

First, the configuration of a canned motor pump will be described.

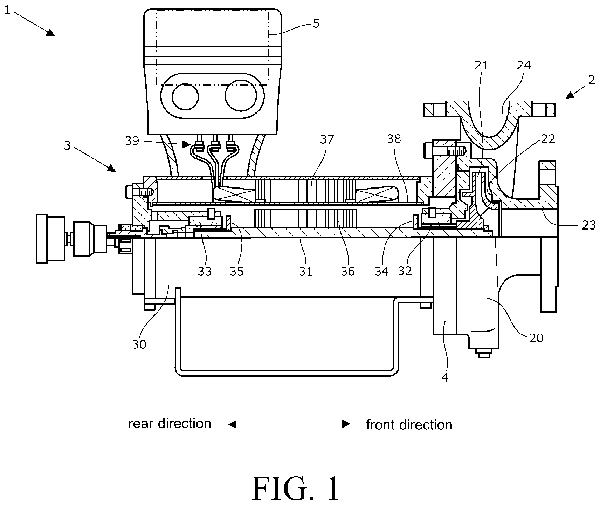

Fig. 1 is a side view of the canned motor pump. The figure illustrates an upper half portion of the canned motor pump 1 in section for convenience of description.

The canned motor pump 1 (hereinafter simply referred to as "pump 1") is a pump having a structure in which handling liquid does not leak and used in particular for feeding high-temperature liquid or highly dangerous liquid (e.g., a liquid that is explosive, flammable, or toxic). The pump 1 includes a pump unit 2, a motor unit 3, an adapter 4, and the present device 5.

In the configurations of the pump 1, the configurations of the pump unit 2, the motor unit 3, and the adapter 4 are common to the configurations of a known canned motor pump. Thus, in the following description, the configurations of the pump unit 2, the motor unit 3, and the adapter 4 will be briefly described, and the detailed description thereof will be omitted.

In the following description, the "front direction" is a direction (forward) in which the pump unit 2 is positioned with respect to the motor unit 3, and the "rear direction" is a direction (backward) in which the motor unit 3 is positioned with respect to the pump unit 2.

The pump unit 2 sucks and discharges the handling liquid. The pump unit 2 includes a housing 20, an impeller 21, a pump chamber 22, a suction pipe portion 23, and a discharge pipe portion 24. The housing 20 includes the pump chamber 22 that accommodates the impeller 21, the suction pipe portion 23 that is a path for the handling liquid to be sucked into the pump chamber 22, and the discharge pipe portion 24 that is a path for the handling liquid to be discharged from the pump chamber 22. The pump chamber 22 communicates with the suction pipe portion 23 and the discharge pipe portion 24.

The motor unit 3 is driven at a predetermined driving voltage and driving frequency (e.g., 200 V, 60 Hz) and rotates the impeller 21 of the pump unit 2. The motor unit 3 includes a housing 30, a rotating shaft 31, two bearings 32 and 33, two thrust washers 34 and 35, a rotor 36, a stator 37, a can 38, and a terminal 39. The motor unit 3 is an example of the motor in the present invention.

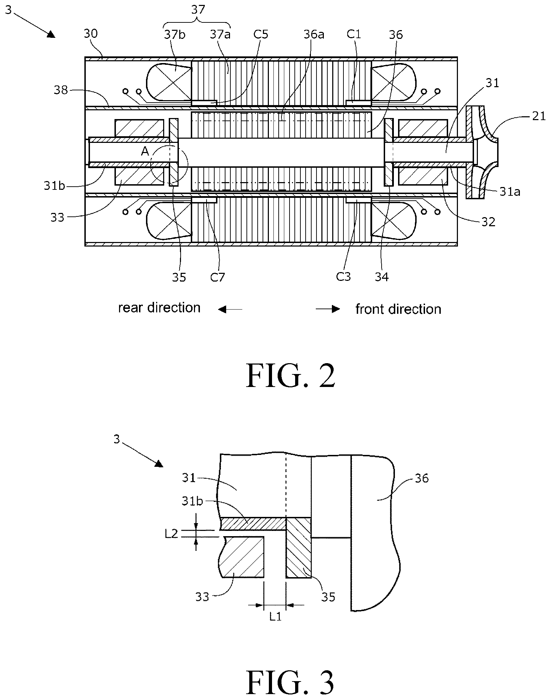

Fig. 2 is a schematic sectional view of the motor unit 3 illustrating a longitudinal section of the motor unit 3. Fig. 3 schematically illustrates an enlarged sectional view of a part A of the motor unit 3 in Fig. 2.

The housing 30 liquid-tightly accommodates the stator 37 and the can 38.

The rotating shaft 31 rotates by the rotation of the rotor 36 and transmits rotating power to the impeller 21. The rotating shaft 31 has a solid cylindrical shape. The rotating shaft 31 is disposed through the rotor 36 and is fixed. A front end portion of the rotating shaft 31 projects into the pump chamber 22 (see Fig. 1), and the impeller 21 is attached to the front end portion. The rotating shaft 31 includes hollow cylindrical-shaped sleeves 31a and 31b that protect a front portion and a rear portion of the rotating shaft 31.

In the following description, the "thrust direction" is an axial direction of the rotating shaft 31, the "radial direction" is a radial direction of the rotating shaft 31, and the "circumferential direction" is a circumferential direction of the rotating shaft 31.

The bearing 32 is disposed at the front direction of the rotor 36 and rotatably supports the rotating shaft 31. The bearing 33 is disposed at the rear direction of the rotor 36 and rotatably supports the rotating shaft 31. The bearings 32 and 33 are rolling bearings, for example. The thrust washer 34 is attached between the bearing 32 and the rotor 36 on the rotating shaft 31 and restricts the movement of the rotating shaft 31 in the front direction. The thrust washer 35 is attached between the bearing 33 and the rotor 36 on the rotating shaft 31 and restricts the movement of the rotating shaft 31 in the rear direction.

A gap of the length L1 is each defined between the bearing 32 and the thrust washer 34 and between the bearing 33 and the thrust washer 35. A gap of the length L2 is each defined between the bearing 32 and the sleeve 31a and between the bearing 33 and the sleeve 31b.

The rotor 36 rotates due to a rotating magnetic field generated in the stator 37. The rotor 36 has a hollow cylindrical shape. The rotor 36 includes a plurality of rod-shaped rotor bars 36a, the number thereof being 28 in the present embodiment, that are embedded at equal intervals in an outer peripheral edge portion of the rotor 36 in the circumferential direction.

The stator 37 generates the rotating magnetic field that rotates the rotor 36. The stator 37 has a substantially hollow cylindrical shape. The stator 37 includes a stator core 37a and a plurality of motor windings 37b.

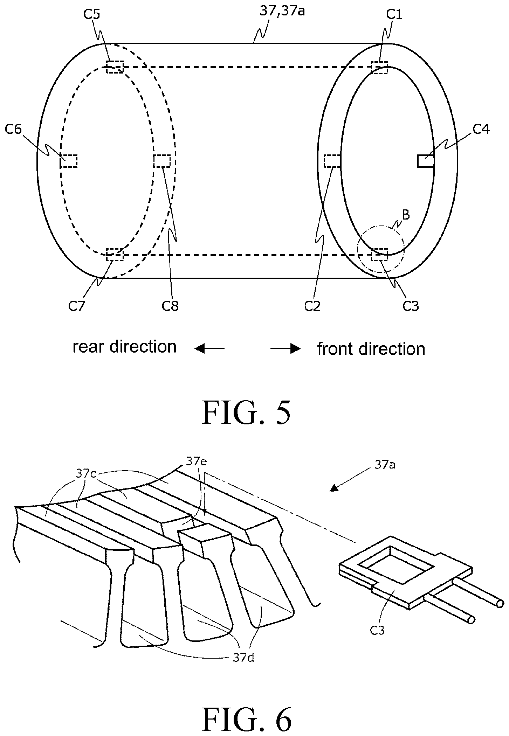

The stator core 37a holds the motor winding 37b. The stator core 37a has a hollow cylindrical shape. The stator core 37a includes a plurality of tooth portions 37c (see Fig. 6, the same applies hereinafter).

The tooth portions 37c define slots 37d (see Fig. 6, the same applies hereinafter) through which the motor windings 37b are disposed. In the circumferential direction, the tooth portions 37c are disposed at equal intervals on an inner peripheral surface of the stator core 37a. The motor windings 37b are disposed through the slots 37d and are connected to a power supply device (not illustrated) such as an inverter, for example, via the terminal 39.

The can 38 liquid-tightly accommodates the rotating shaft 31, the bearings 32 and 33, the thrust washers 34 and 35, and the rotor 36. The can 38 has a hollow cylindrical shape. Some handling liquid introduced from the suction pipe portion 23 is introduced into the can 38, used for cooling the bearings 32 and 33 and the motor unit 3, and discharged to the discharge pipe portion 24.

Referring now back to Fig. 1, the adapter 4 is connected to an end portion of the pump unit 2 on the rear side and an end portion of the motor unit 3 on the front side, and the adapter 4 interconnects the pump unit 2 and the motor unit 3.

The present device 5 detects a change in magnetic flux corresponding to a mechanical position change of the rotor 36 with respect to the stator 37, thereby monitoring a wear state of the bearings 32 and 33 supporting the rotating shaft 31. A specific configuration of the present device 5 will be described later.

### Motor Bearing Wear Monitoring Device (1)

### Configuration of Motor Bearing Wear Monitoring Device (1)

Next, the configuration of the present device 5 will be described. In the following description, Figs. 1 to 3 will be referred to as appropriate.

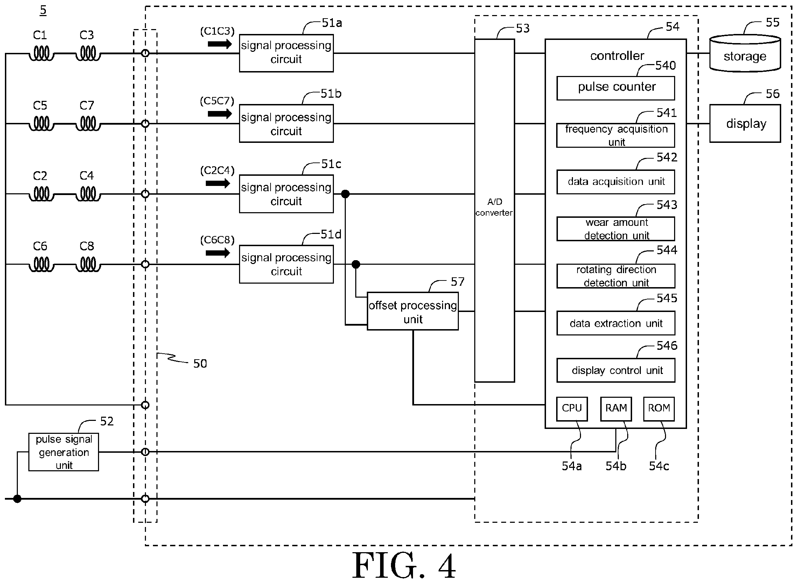

Fig. 4 is a functional block diagram illustrating an embodiment of the present device 5.

The present device 5 includes eight detection coils C1, C2, C3, C4, C5, C6, C7, and C8, a connection 50, signal processing circuits 51a, 51b, 51c, and 51d, a pulse signal generation unit 52, an A/D converter 53, a controller 54, a storage 55, a display 56, and an offset processing unit 57. The A/D converter 53 and the controller 54 are implemented by a microcomputer, for example.

Fig. 5 is a schematic perspective view illustrating the arrangement of the detection coils C1 to C8. Fig. 6 is an enlarged perspective view of a part B in Fig. 5.

The detection coils C1 to C8 detect a change in magnetic flux corresponding to a position change (displacement) of the rotor 36 with respect to the stator 37 and generate and output detection signals indicating the change in the magnetic flux. The rotor 36 is displaced in the radial direction together with the rotating shaft 31 depending on an amount of wear of the bearings 32 and 33 in the radial direction, and the rotor 36 is displaced in the thrust direction together with the rotating shaft 31 depending on an amount of wear of the bearings 32 and 33 in the thrust direction. That is, the amount of displacement of the rotor 36 can be regarded as the amount of wear of the bearings 32 and 33. Thus, the present device 5 is able to detect the amount of wear of the bearings 32 and 33 by detecting the amount of displacement of the rotor 36 by using the detection coils C1 to C8. The detection coils C1 to C8 have a flat bobbin shape. The detection coils C1 to C8 are fitted into notches 37e formed in tooth portions 37c at end portions on the front side and the rear side of the stator 37.

**In** the circumferential direction, the detection coils C1 to C4 are attached at equal intervals (at intervals of 90 degrees) to a front end portion of the tooth portions 37c of the stator 37. The detection coil C1 is disposed at a position of 180 degrees with respect to the detection coil C3 so as to face the detection coil C3, and the detection coil C2 is disposed at a position of 180 degrees with respect to the detection coil C4 so as to face the detection coil C4. **In** contrast, in the circumferential direction, the detection coils C5 to C8 are attached at equal intervals (at intervals of 90 degrees) to a rear end portion of the tooth portions 37c of the stator 37. The detection coil C5 is disposed at a position of 180 degrees with respect to the detection coil C7 so as to face the detection coil C7, and the detection coil C6 is disposed at a position of 180 degrees with respect to the detection coil C8 so as to face the detection coil C8.

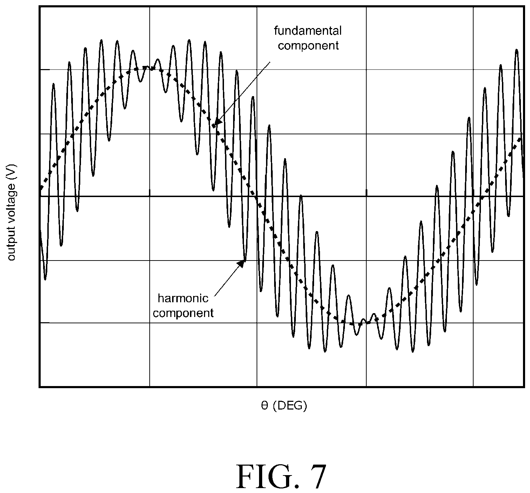

Fig. 7 is a schematic diagram illustrating an example of the detection signal.

The detection signals of the detection coils C1 to C8 include a waveform corresponding to a change in main magnetic flux of the motor unit 3 (hereinafter referred to as "fundamental component") and a waveform corresponding to a change in magnetic flux generated by an induced current flowing through the rotor bars 36a of the rotor 36 (hereinafter referred to as "harmonic component"). The fundamental component is generated by a driving voltage of the motor unit 3, and the frequency thereof is the same as a driving frequency of the driving voltage. The harmonic component is generated by the induced current flowing through the rotor bars 36a, and the frequency thereof is determined by the rotation of the rotor 36 and the number of the rotor bars 36a. That is, for example, under the following conditions: the driving frequency is 60 Hz, and the number of rotor bars 36a is 28, each of the detection coils C1 to C8 detects 28 times a change in the magnetic flux due to the rotor bar 36a while the rotor 36 rotates once. Thus, the frequency of the harmonic component is 60 Hz×28=1.68 kHz. In this way, the fundamental component is determined based on the driving frequency, and the harmonic component is determined based on the rotation of the rotor 36, the driving frequency, and the number of the rotor bars 36a.

Referring now back to Figs. 5 and 6, the detection coils C1, C3, C5, and C7 detect the amount of displacement of the rotor 36 in the radial direction, i.e., the amount of wear of the bearings 32 and 33 in the radial direction, by detecting the change in the magnetic flux corresponding to the displacement of the rotor 36 in the radial direction due to an increase in the gap (L2) between the bearing 32 and the sleeve 31a and between the bearing 33 and the sleeve 31b. The detection coils C1 and C3 constitute a pair of radial detection coils and are connected so that the detection signals thereof cancel each other out. The detection coils C5 and C7 constitute another pair of radial detection coils and are connected so that the detection signals thereof cancel each other out. Thus, a combined signal obtained by combining each detection signal of the detection coils C1 and C3 (hereinafter referred to as "combined signal C1C3") indicates a difference between each detection signal of the detection coils C1 and C3. The amount of displacement of the rotor 36 in the radial direction on the front side is detected due to the difference. That is, the difference indicates the amount of wear of the bearing 32 in the radial direction, and the value of the difference is represented by a voltage value. Similarly, a combined signal obtained by combining each detection signal of the detection coils C5 and C7 (hereinafter referred to as "combined signal C5C7") indicates a difference between each detection signal of the detection coils C5 and C7. The amount of displacement of the rotor 36 in the radial direction on the rear side is detected due to the difference. That is, the difference indicates the amount of wear of the bearing 33 in the radial direction, and the value of the difference is represented by a voltage value. Accordingly, for example, when there is no displacement of the rotor 36 in the radial direction, the fundamental component and the harmonic component cancel each other out in the combined signals C1C3 and C5C7, and the voltage value thereof is approximately "0". In contrast, when there is displacement of the rotor 36 in the radial direction, a difference occurs between each magnitude of signal levels (amplitude) of the harmonic components of the detection signals of the detection coils C1 and C3, and a difference occurs between each magnitude of signal levels of the harmonic components of the detection signals of the detection coils C5 and C7. Thus, in each combined signal C1C3 and C5C7, the difference value of the harmonic components, i.e., the voltage value of each combined signal C1C3 and C5C7, increases depending on the amount of displacement. The detection coils C1 and C3 are independent of the detection coils C5 and C7, and thus the uneven wear of the bearings 32 and 33, i.e., a state where one bearing is more worn than the other bearing, is detectable by comparing the combined signal C1C3 with the combined signal C5C7.

The detection coils C2, C4, C6, and C8 are able to detect the amount of displacement of the rotor 36 in the thrust direction, i.e., the amount of wear of the bearings 32 and 33 in the thrust direction, by detecting the change in the magnetic flux corresponding to the displacement of the rotor 36 in the thrust direction due to an increase in the gap (L1) between the bearing 32 and the thrust washer 34 and between the bearing 33 and the thrust washer 35. The detection coils C2 and C4 constitute a pair of thrust detection coils and are connected so that detection signals thereof are superimposed on each other. The detection coils C6 and C8 constitute another pair of thrust detection coils and are connected so that the detection signals thereof are superimposed on each other. The amount of displacement of the rotor 36 in the thrust direction is detected by combining a combined signal obtained by combining each detection signal of the detection coils C2 and C4 (hereinafter referred to as "combined signal C2C4") with a combined signal obtained by combining each detection signal of the detection coils C6 and C8 (hereinafter referred to as "combined signal C6C8") in such a way as to obtain a difference therebetween. That is, the difference indicates the amount of displacement of the rotor 36 in the thrust direction, i.e., the amount of wear of the bearings 32 and 33 in the thrust direction, and the value of the difference is represented by a voltage value. Accordingly, for example, when there is no displacement of the rotor 36 in the thrust direction, the fundamental component and the harmonic component cancel each other out in the difference, and the voltage value thereof is approximately "0". In contrast, when there is displacement of the rotor 36 in the thrust direction, the signal level of the fundamental component of the combined signal on one side (e.g., the combined signal C2C4) decreases depending on the amount of the displacement, and the signal level of the fundamental component of the combined signal on the other side (e.g., the combined signal C6C8) hardly changes. Thus, the difference value (the voltage value) of the fundamental component in the signal indicating the difference increases depending on the amount of displacement. The direction of displacement in the thrust direction is also detectable by comparing the magnitude of the combined signal C2C4 with the magnitude of the combined signal C6C8.

Referring now back to Fig. 4, the connection 50 is an interface to which the detection coils C1 to C8, the pulse signal generation unit 52, and a three-phase alternating current power supply described later are connected.

Each of the signal processing circuits 51a to 51d is connected to the corresponding pair of detection coils among the detection coils C1 to C8 and converts the corresponding combined signal among the combined signals C1C3 to C6C8 from alternating current to direct current. The signal processing circuits 51a to 51d include a filter circuit, a rectifier circuit, and an integrating circuit, for example.

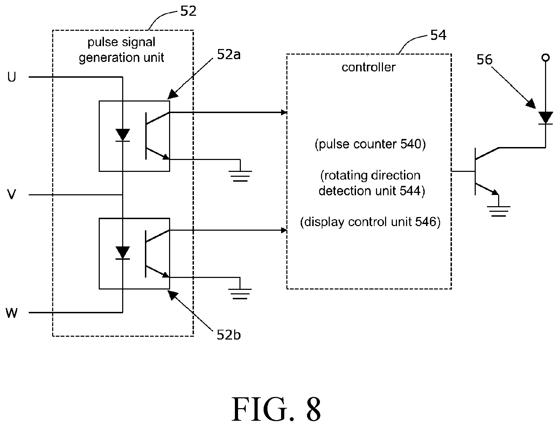

Fig. 8 is a schematic diagram illustrating an example of a configuration of the pulse signal generation unit 52. The figure also illustrates the controller 54 for convenience of description. The pulse signal generation unit 52 is connected to power supply lines of the three-phase AC power supply for the motor unit 3 between a first phase (U) line and a second phase (V) line and between the second phase line and a third phase (W) line of the power supply lines and generates a pulse signal corresponding to each voltage across the lines between the first phase and the second phase and between the second phase and the third phase. The pulse signal generation unit 52 is a known phase detection circuit including two photocouplers 52a and 52b, for example. The pulse signal is used for detecting a rotating direction of the rotating shaft 31 and for acquiring a driving frequency, which is described later. The power supply lines are connected to an inverter (not illustrated), for example, and a voltage and a driving frequency of the three-phase AC power supply are controlled by the inverter.

Referring now back to Fig. 4, the A/D converter 53 converts analog signals input from each of the signal processing circuits 51a to 51d, an arithmetic circuit 57c described later, and a difference absolute value conversion circuit 57d described later into digital signals and outputs the digital signals to the controller 54.

The controller 54 controls the operation of the whole present device 5. The controller 54 includes, for example, a processor such as a central processing unit (CPU) 54a, a volatile memory such as a random access memory (RAM) 54b that functions as a working area for the CPU 54a, and a non-volatile memory such as a read only memory (ROM) 54c that stores various kinds of information such as the present program and other control programs. The controller 54 includes a pulse counter 540, a frequency acquisition unit 541, a data acquisition unit 542, a wear amount detection unit 543, a rotating direction detection unit 544, a data extraction unit 545, and a display control unit 546.

In the controller 54, the present program operates, and the present program cooperates with the hardware resources of the present device 5 and achieves each method described later. By causing the processor (the CPU 54a) included in the controller 54 to execute the present program, the present program enables the processor to function as the pulse counter 540, the frequency acquisition unit 541, the data acquisition unit 542, the wear amount detection unit 543, the rotating direction detection unit 544, the data extraction unit 545, and the display control unit 546 and enables the processor to execute the present method.

The pulse counter 540 counts the number of pulses of the pulse signal per predetermined unit time (e.g., 1 sec). A specific operation of the pulse counter 540 will be described later.

The frequency acquisition unit 541 acquires the driving frequency of the motor unit 3, based on a state signal. A specific operation of the frequency acquisition unit 541 will be described later.

The "state signal" is a signal acquired to detect a state of the rotor 36 with respect to the stator 37 and is a pulse signal in the present embodiment.

"The state of the rotor 36 with respect to the stator 37" indicates a mechanical change of the rotor 36 with respect to the stator 37 and is a rotating direction of the rotor 36 in the present embodiment.

The data acquisition unit 542 acquires adjustment data corresponding to the driving frequency, based on the driving frequency acquired by the frequency acquisition unit 541. A specific operation of the data acquisition unit 542 will be described later.

The "adjustment data" is information composed of a group of parameters necessary for the present device 5 to accurately detect the amount of displacement of the rotor 36, i.e., the amount of wear of the bearings 32 and 33, based on the detection signals of the detection coils C1 to C8. The adjustment data includes, for example, variable parameters (e.g., offset information, first correspondence information, etc.,) that vary depending on a fluctuation of the driving frequency, and invariant parameters (e.g., display information, second correspondence information, etc.,) that do not vary at each driving frequency (i.e., invariant parameters are common to each driving frequency). The adjustment data is measured or set in advance for each predetermined driving frequency (e.g., 40 Hz, 50 Hz, 60 Hz) prior to shipping of the pump 1, for example, and the adjustment data is stored in the storage 55 in association with the driving frequency.

The "offset information" is information indicating an offset voltage to be added to or subtracted from the combined signal C2C4 in the offset processing (e.g., a digital conversion value of a voltage value).

The "offset processing" means processing for adding or subtracting the offset voltage to or from the combined signal C2C4 in such a way that a difference between the combined signal C2C4 and the combined signal C6C8 correctly indicates the amount of displacement of the rotor 36 in the thrust direction, i.e., the amount of wear of the bearings 32 and 33 in the thrust direction, corresponding to the driving frequency.

Whether the offset voltage is a signal to be added to the combined signal C2C4, i.e., an addition signal, or a signal to be subtracted from the combined signal C2C4, i.e., a subtraction signal, is determined by each magnitude of the combined signals C2C4 and C6C8. That is, for example, when the combined signal C2C4 is larger than the combined signal C6C8, the offset voltage is a subtraction signal, and when the combined signal C2C4 is smaller than the combined signal C6C8, the offset information is an addition signal. In the present embodiment, the offset voltage is an addition signal.

The "first correspondence information" is information indicating a correspondence between a position (an amount of displacement) of the rotor 36 with respect to the stator 37 in the thrust direction and a voltage value (a difference value) of the difference between the combined signal C2C4 and the combined signal C6C8. "The position of the rotor 36 in the thrust direction in the first correspondence information" is, for example, a central position (a machine center described later), a position displaced by a predetermined distance from the central position to the front side (hereinafter referred to as "front position"), and a position displaced by a predetermined distance from the central position to the rear side (hereinafter referred to as "rear position"). The "predetermined distance" is a distance equivalent to 50% of the maximum displacement amount of the bearings 32 and 33, for example, corresponding to play in a state where the bearings 32 and 33 are not worn. As described above, the amount of displacement of the rotor 36 with respect to the stator 37 in the thrust direction means the amount of wear of the bearings 32 and 33 in the thrust direction. That is, the first correspondence information indicates the correspondence between the amount of wear of the bearings 32 and 33 and the difference value in the thrust direction.

The "display information" is information indicating a relation between the amount of displacement of the rotor 36 with respect to the stator 37 (the amount of wear of the bearings 32 and 33) and a display mode of light emitting diodes (LEDs) in the display 56. The amount of displacement (the amount of wear) is represented by a ratio (%) to the maximum amount of displacement (the maximum amount of wear). Since the ratio is common to each driving frequency, the display information is an invariant parameter.

The "second correspondence information" is information indicating a correspondence between a position (an amount of displacement) of the rotor 36 with respect to the stator 37 in the radial direction and a voltage value (a difference value) of each combined signal (C1C3, C5C7) in the radial direction. As described above, the displacement in the radial direction is detected by the magnitude of the difference between the harmonic components, and thus the influence of the fluctuation of the driving frequency hardly occurs. Thus, the second correspondence information is treated as an invariant parameter.

The wear amount detection unit 543 detects the amount of displacement of the rotor 36 in the radial direction, based on the second correspondence information and the combined signals C1C3 and C5C7, and thus the wear amount detection unit 543 detects the amount of wear of the bearings 32 and 33 in the radial direction. The wear amount detection unit 543 detects the amount of displacement of the rotor 36 in the thrust direction, based on the first correspondence information and the difference between the combined signal C2C4 and the combined signal C6C8, and thus the wear amount detection unit 543 detects the amount of wear of the bearings 32 and 33 in the thrust direction. A specific operation of the wear amount detection unit 543 will be described later.

The rotating direction detection unit 544 detects the rotating direction of the rotor 36, based on the pulse signal from the pulse signal generation unit 52. A specific operation of the rotating direction detection unit 544 will be described later.

The data extraction unit 545 extracts the offset information necessary for the offset processing from the adjustment data acquired by the data acquisition unit 542 and outputs the extracted offset information to the offset processing unit 57.

The display control unit 546 controls a display on the display 56, based on the display information, the detected amount of wear, and the detected rotating direction.

The storage 55 stores information (e.g., adjustment data, etc.,) necessary for the operation of the present device 5. The storage 55 is a non-volatile memory such as an electrically erasable programmable read-only memory (EEPROM) or a flash memory, for example.

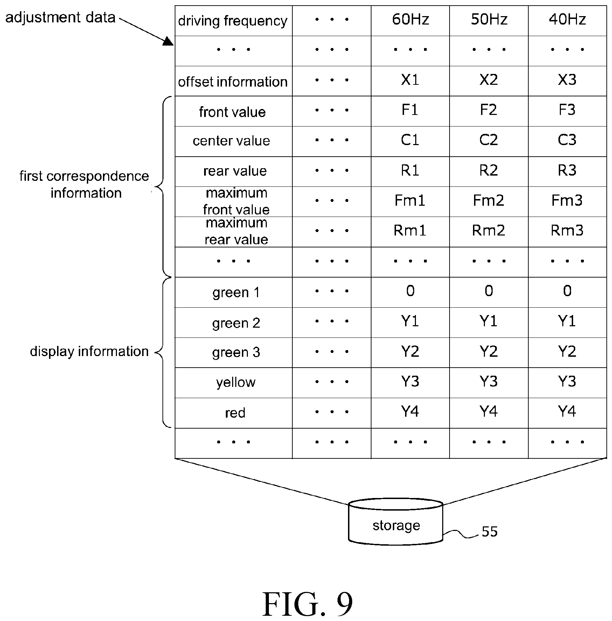

Fig. 9 is a schematic diagram illustrating an example of the information, i.e., the adjustment data, stored in the storage 55. The figure exemplarily illustrates a part of the adjustment data. The figure illustrates that the offset information, the first correspondence information, and the display information, i.e., the adjustment data, are associated with each driving frequency and stored in the storage 55. The data acquisition unit 542 is able to retrieve the adjustment data associated with the driving frequency and stored in the storage 55 by referring to the storage 55 with the acquired driving frequency, for example.

The display 56 displays the amount of wear of the bearings 32 and 33 and the rotating direction. The display 56 includes a plurality of LEDs that displays the amount of wear and the rotating direction, for example.

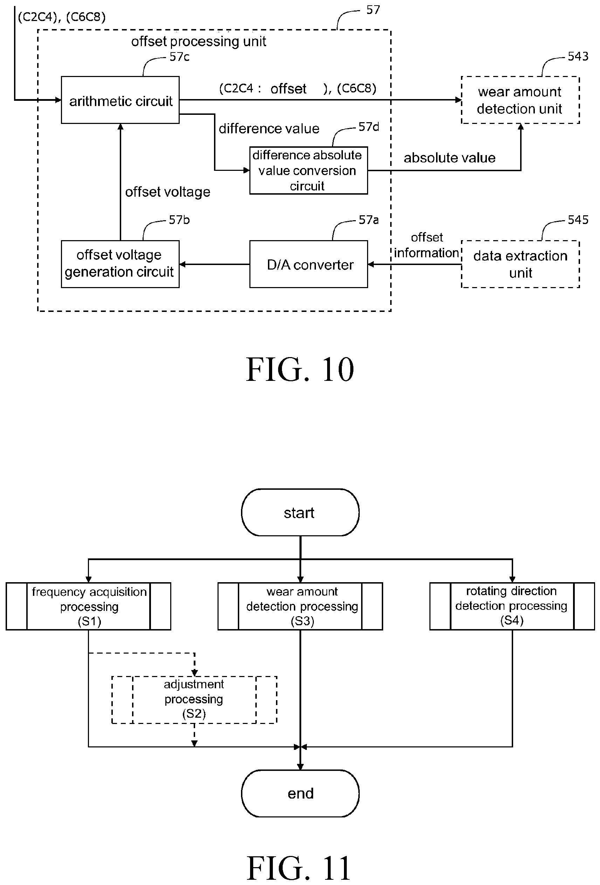

Fig. 10 is a functional block diagram of the offset processing unit 57.

The offset processing unit 57 executes the offset processing, based on the offset information included in the adjustment data. The offset processing unit 57 includes a D/A converter 57a, an offset voltage generation circuit 57b, an arithmetic circuit 57c, and a difference absolute value conversion circuit 57d.

The D/A converter 57a converts the offset information output from the controller 54 (the data extraction unit 545) from the digital signal to the analog signal.

The offset voltage generation circuit 57b generates an offset voltage to be added to or subtracted from the combined signal C2C4 of the detection coils C2 and C4, based on the offset information converted into the analog signal. The offset voltage is an example of an offset signal in the present invention.

The arithmetic circuit 57c executes the offset processing to the combined signal C2C4 by adding or subtracting the offset voltage to or from the combined signal C2C4 and also calculates a difference value between the combined signal C2C4 after the offset processing and the combined signal C6C8.

The difference absolute value conversion circuit 57d converts the difference value calculated by the arithmetic circuit 57c into an absolute value.

### Operation of Canned Motor Pump (Motor Bearing Wear Monitoring Device (1))

Next, operations of the pump 1 will be described below with a focus on operations of the present device 5. In the following description, Figs. 1 to 10 will be referred to as appropriate.

Fig. 11 is a flowchart illustrating an example of the operations of the present device 5.

When the pump 1 is in operation, the motor unit 3 is supplied with the driving power, and the rotor 36, the rotating shaft 31, and the impeller 21 are rotating at a predetermined number of revolutions. In this case, the present device 5 repeatedly executes frequency acquisition processing S1, wear amount detection processing S3, and rotating direction detection processing S4 at all times.

### Frequency Acquisition Processing

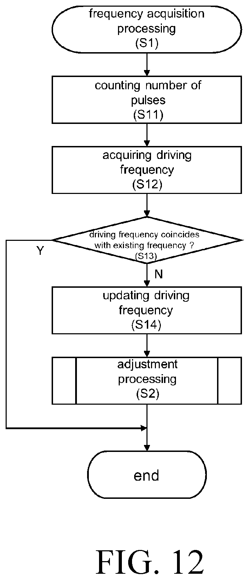

Fig. 12 is a flowchart illustrating an example of the frequency acquisition processing (S1).

The "frequency acquisition processing (S1)" is processing for acquiring the driving frequency of the motor unit 3, based on the pulse signal from the pulse signal generation unit 52. The present device 5 executes the frequency acquisition processing (S1) every time the present device 5 receives the pulse signal. The pulse signal used in the frequency acquisition processing (S1) is generated by the photocoupler 52a and is output to the controller 54 (the pulse counter 540).

Note that, in the present invention, the pulse counter 540 may count the number of pulses of the pulse signal output from the photocoupler 52b instead of the photocoupler 52a.

First, the pulse counter 540 counts the number of pulses of the pulse signal per predetermined unit time (e.g., 1 sec), i.e., the number of cycles (S11).

Then, the frequency acquisition unit 541 acquires the driving frequency by calculating the driving frequency, based on the unit time and the number of pulses (S12). That is, when the counted number of pulses is "60", the driving frequency is "60 Hz", for example.

Then, the frequency acquisition unit 541 compares the acquired driving frequency with the driving frequency stored in the RAM 54b (hereinafter referred to as "existing frequency") (S13).

When the acquired driving frequency coincides with the existing frequency ("Y" in S13), the present device 5 ends the driving frequency acquisition processing (S1).

In contrast, when the acquired driving frequency and the existing frequency do not coincide with each other ("N" in S13), the frequency acquisition unit 541 updates the existing frequency stored in the RAM 54b to the acquired driving frequency (S14). As a result, the updated driving frequency is stored in the RAM 54b as an existing frequency. Then, the present device 5 executes the adjustment processing (S2).

Herein, the "coincidence between the driving frequency and the existing frequency" includes not only a state where the driving frequency and the existing frequency completely coincide with each other but also a state where the driving frequency and the existing frequency are slightly deviated (e.g., about actual driving frequency ±5%) by an error caused by various factors (e.g., fluctuations within a frequency deviation of the commercial power supply).

Note that, immediately after the present device 5 is turn on, RAM 54b does not store the existing frequency and the adjustment data. In this case, the acquired driving frequency and the existing frequency do not coincide with each other (the information does not coincide), and thus the present device 5 executes the adjustment processing (S2).

In the present invention, the present device 5 may retrieve the lastly used adjustment data from the storage 55 immediately after the present device 5 is turn on and before executes the frequency acquisition processing (S1).

In the present invention, the frequency acquisition unit 541 may update the existing frequency to the acquired driving frequency without comparing the acquired driving frequency with the existing frequency.

### Adjustment Processing

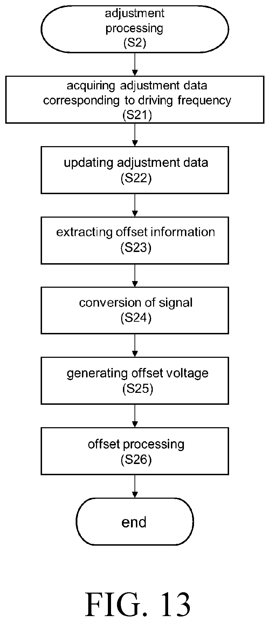

Fig. 13 is a flowchart illustrating an example of the adjustment processing (S2).

The "adjustment processing (S2)" is processing for acquiring the adjustment data corresponding to the updated driving frequency, and updating the adjustment data stored in the RAM 54b and executing the offset processing corresponding to the driving frequency, based on the acquired adjustment data. The frequency acquisition processing (S1), the adjustment processing (S2), and the wear amount detection processing (S3) described later are examples of the present method.

First, the data acquisition unit 542 retrieves the adjustment data stored in the storage 55 in association with the updated driving frequency (the existing frequency), thereby acquiring the adjustment data corresponding to the driving frequency (S21).

Note that, in the present invention, when the adjustment data corresponding to the updated driving frequency is not stored in the storage 55, the data acquisition unit 542 may retrieve, from the storage 55, the adjustment data corresponding to the driving frequency closest to the acquired driving frequency.

Then, the data acquisition unit 542 updates the adjustment data stored in the RAM 54b (hereinafter referred to as "existing adjustment data") to the acquired adjustment data (S22).

Then, the data extraction unit 545 retrieves (extracts) the offset information from the RAM 54b (S23). The offset information is output to the offset processing unit 57.

In the offset processing unit 57, the conversion of the signal (S24), the generation of the offset voltage (S25), and the offset processing (S26) are executed.

First, specifically, the D/A converter 57a converts the offset information from the digital signal to the analog signal (S24). Then, the offset voltage generation circuit 57b generates the offset voltage, based on the offset information after the conversion (S25). Then, the arithmetic circuit 57c executes the offset processing, based on the offset voltage (S26). As described above, the offset processing is executed by adding or subtracting (adding in the present embodiment) the offset voltage to or from the combined signal C2C4.

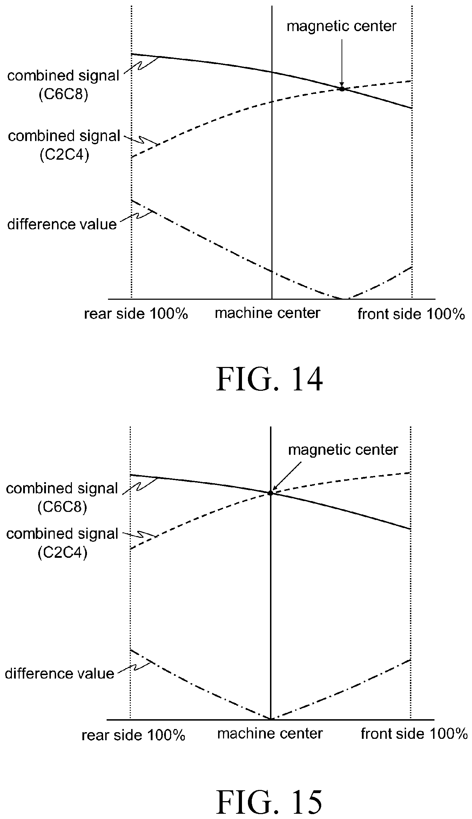

Fig. 14 is a schematic diagram illustrating an example of the combined signals C2C4 and C6C8 before the offset processing. Fig. 15 is a schematic diagram illustrating an example of the combined signals C2C4 and C6C8 after the offset processing. In both figures, the vertical axis indicates a voltage value and a difference value of the combined signals C2C4 and C6C8. The horizontal axis indicates a ratio (%) of the amount of wear to the maximum amount of wear of the bearings 32 and 33 in the thrust direction. A right half part of the horizontal axis indicates the amount of wear (the amount of displacement) on the front side, a left half part indicates the amount of wear (the amount of displacement) on the rear side, and a midpoint of the horizontal axis indicates a mechanical center position of the rotor 36 (hereinafter referred to as "machine center"). An intersection of each plot line indicating a change in the combined signals C2C4 and C6C8 indicates a magnetic center described later (hereinafter referred to as "magnetic center"). The dash-dotted line indicates a plot line of the difference value.

The "machine center" means a position of the rotor 36 in the initial state with respect to the stator 37 in the thrust direction. Thus, when the bearings 32 and 33 are not worn, the center of the rotor 36 coincides with the center of the stator 37 in the thrust direction. In the thrust direction, when the center of the rotor 36 coincides with the center of the stator 37, the changes in the magnetic flux on the front side and on the rear side are equal, and the "magnetic center" is located at the "machine center". The amount of wear resulting from the subsequent driving of the pump 1 is correctly detected by achieving such the initial state.

Note that a state where "the center of the rotor 36 coincides with the center of the stator 37" includes a deviation due to errors in manufacturing the motor unit 3 and the like, and both centers need not coincide completely.

Herein, due to manufacturing reasons and the like, the position of the rotor 36 with respect to the center of the stator 37 does not coincide after the motor unit 3 is assembled, and the magnetic center in the initial state may deviate from the machine center. In this case, the amount of wear is not correctly detected. When the driving frequency is changed for driving the pump 1 in the deviated state, the voltage value of the combined signals C2C4 and C6C8 also changes, and the amount of deviation of the magnetic center further varies. In order to accommodate the initial state in which the magnetic center is deviated in this way, the offset processing unit 57 causes the voltage value of the combined signal C2C4 and the voltage value of the combined signal C6C8 to coincide with each other in the initial state and executes the offset processing to make a state as if the magnetic center in the initial state coincided with the machine center. That is, the processing for matching both voltage values is the offset processing with the offset voltage, and the offset processing is executed every time the adjustment processing (S2) is executed. The offset processing will be described below with reference to Figs. 14 and 15.

As illustrated in Fig. 14, the combined signal C2C4 before the offset processing is at a low potential with respect to the combined signal C6C8 at the machine center, and the magnetic center that is an intersection of the two plot lines may be deviated from the machine center to the front side. When such deviation occurs, the wear amount detection unit 543 is not able to detect an accurate amount of wear, and the display 56 may display an erroneous amount of wear. The offset voltage is added to the combined signal C2C6 in order to eliminate this deviation. That is, as illustrated in Figs. 14 and 15, the offset processing is processing for adding the offset voltage to the combined signal C2C4 in such a way that the voltage value of the combined signal C2C4 and the voltage value of the combined signal C6C8 coincide at the machine center, i.e., in such a way that the magnetic center coincides with the machine center, thereby adjusting the voltage value to make a state as if the center of the rotor 36 with respect to the center of the stator 37 coincided with each other from the initial state. In other words, the offset processing is processing for always adding the offset voltage to the combined signal C2C4 when the pump 1 is driven in such a way that the voltage value of the combined signal C2C4 and the voltage value of the combined signal C6C8 coincide with each other in a state where the bearings 32 and 33 are not worn. The plot line of the combined signal C2C4 after the offset processing intersects the plot line of the combined signal C6C8 at the machine center as illustrated in Fig. 15. As a result, the difference between the combined signal C2C4 and the combined signal C6C8 after the offset processing is adjusted in such a way as to indicate the amount of wear corresponding to the driving frequency.

Herein, the "magnetic center" is a point where the voltage values of the two combined signals C2C4 and C6C8 coincide and indicates a position where the changes in the magnetic flux in the thrust direction balance out as illustrated in Figs. 14 and 15. Accordingly, the offset processing is also processing for adjusting the magnetic center to the machine center, i.e., zero adjustment.

Note that, in the present invention, the arithmetic circuit 57c may add or subtract the offset voltage to or from the combined signal C6C8 instead of the combined signal C2C4. In this case, the offset information is set in such a way as to correspond to the combined signal C6C8.

In the present invention, the arithmetic circuit 57c may add or subtract the offset voltage to or from each combined signal (C2C4, C6C8). In this case, the offset information is set in such a way as to correspond to each combined signal (C2C4, C6C8).

### Wear Amount Detection Processing

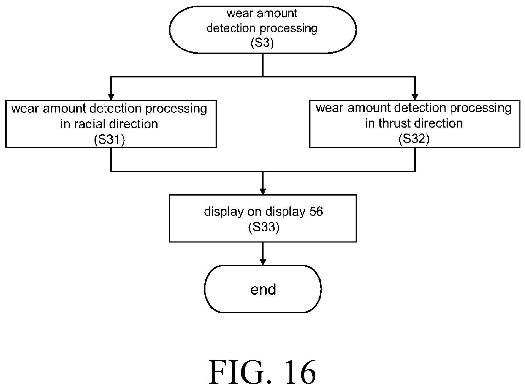

Fig. 16 is a flowchart illustrating an example of the wear amount detection processing (S3).

The "wear amount detection processing (S3)" is processing for detecting the amount of wear of the bearings 32 and 33, based on each of the combined signals C1C3 to C6C8.

The detection coils C1 to C8 output the detection signals when the rotor 36 rotates at all times. The combined signals C1C3 and C5C7 from the detection coils C1, C3, C5, and C7 are input to the wear amount detection unit 543 via the signal processing circuits 51a and 51b and the A/D converter 53.

The detection signals (the combined signals C2C4 and C6C8) from the detection coils C2, C4, C6, and C8 are input to the arithmetic circuit 57c via the signal processing circuits 51c and 51d. The offset processing is executed, and a difference value is calculated in the arithmetic circuit 57c. The difference value is converted into an absolute value by the difference absolute value conversion circuit 57d. The combined signals C2C4 and C6C8 after the offset and the absolute value are input to the wear amount detection unit 543 via the A/D converter 53.

In the wear amount detection processing (S3), the wear amount detection unit 543 individually executes the wear amount detection processing in the radial direction (S31) and the wear amount detection processing in the thrust direction (S32).

In the wear amount detection processing in the radial direction (S31), the wear amount detection unit 543 detects the amount of wear of the bearings 32 and 33, based on the second correspondence information, the voltage value of the combined signal C1C3, and the voltage value of the combined signal C5C7. Then, the wear amount detection unit 543 compares each amount of wear and selects the larger amount of wear as the amount of wear in the radial direction. The detected amount of wear is stored in the storage 55 as log information, for example.

**In** the wear amount detection processing in the thrust direction (S32), the wear amount detection unit 543 detects the amount of wear of the bearings 32 and 33 in the thrust direction, based on the first correspondence information and the absolute value of the difference value. The detected amount of wear is stored in the storage 55 as the log information, for example.

**In** this way, the combined signal C2C4 after the offset processing with the offset voltage is used in the wear amount detection processing in the thrust direction (S32). Thus, as described above, the wear amount detection unit 543 is able to detect the amount of wear in the thrust direction corresponding to the driving frequency.

Then, the display control unit 546 determines a display mode of the display 56, based on the detected amount of wear, and displays the detected amount of wear on the display 56 in the determined display mode (S33).

### Rotating Direction Detection Processing

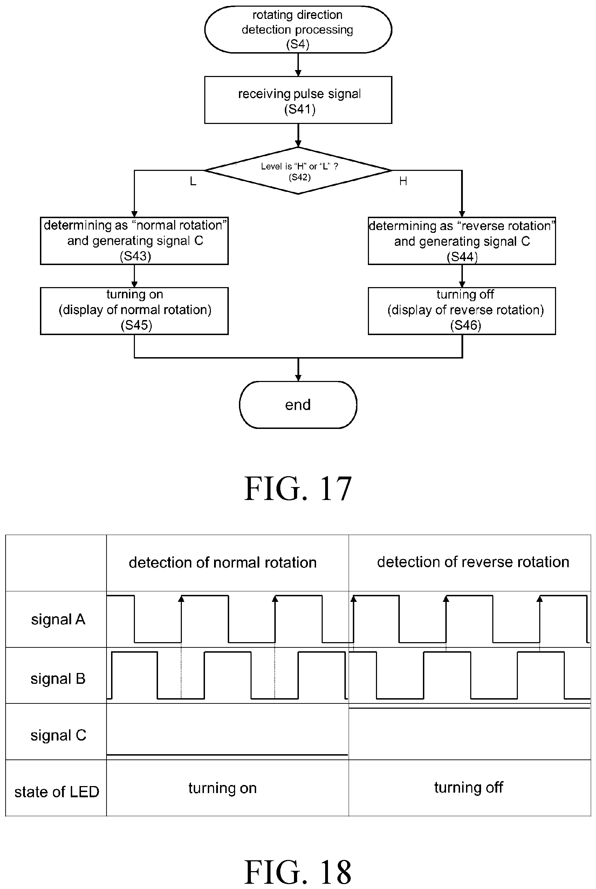

Fig. 17 is a flowchart illustrating an example of the rotating direction detection processing (S4). Fig. 18 is a schematic diagram illustrating a principle for detecting the rotating direction in the rotating direction detection unit 544.

The "rotating direction detection processing (S4)" is processing for detecting the rotating direction of the rotor 36, based on the pulse signal from the pulse signal generation unit 52.

While powered on, the pulse signal generation unit 52 generates a pulse signal at all times and outputs the generated pulse signal to the controller 54 (the rotating direction detection unit 544).

The rotating direction detection unit 544 receives a pulse signal from the photocoupler 52a (hereinafter referred to as "signal A") and a pulse signal from the photocoupler 52b (hereinafter referred to as "signal B") (S41).

Then, the rotating direction detection unit 544 detects a level of the signal B at the rising edge of the signal A and determines whether the level is "H" (high level) or "L" (low level) (S42).

When the level of the signal B is "L", the rotating direction detection unit 544 determines that the rotating direction is "normal rotation" and generates a signal C with the level "L" (S43). **In** contrast, when the level of the signal B is "H", the rotating direction detection unit 544 determines that the rotating direction is "reverse rotation" and generates the signal C with the level "H" (S44).

Then, the display control unit 546 causes the display 56 to display the "normal rotation" when the level of the signal C is "L" (S45) and causes the display 56 to display the "reverse rotation" when the level of the signal C is "H" (S46).

Note that, in the present invention, the rotating direction detection unit 544 may detect erroneous wiring and generate the signal C in which "H" and "L" are alternately continued, and the display control unit 546 may cause the LED to blink.

In this way, the present device 5 also diverts the pulse signal used to detect the rotating direction of the rotor 36 to acquire the driving frequency. That is, the present device 5 is able to acquire the driving frequency without requiring a special signal, wiring, and a component for acquiring the driving frequency. In general, a canned motor pump is required to have an explosion-proof structure due to handling liquid and an installation environment. Equipment having an explosion-proof structure must comply with the Constructional Requirements for explosion-proof structure, and it is difficult to change the physical configuration of the equipment. The information on the driving frequency can be obtained from the inverter, but in this case, dedicated wiring between the present device 5 and the inverter is required at the installation site of the pump 1. In contrast, as described above, the present device 5 diverts the pulse signal from the known phase detection circuit used for detecting the rotating direction to acquire the driving frequency. Thus, the present device 5 is able to be implemented only by changing the control program (executing the present program) in an existing motor bearing wear monitoring device (hereinafter referred to as "existing device") having an explosion-proof structure without changing the physical configuration. That is, the present invention is applicable to existing devices having an explosion-proof structure without changing the explosion-proof structure.

### Conclusion (1)

According to the embodiment described above, the present device 5 includes the wear amount detection unit 543, the frequency acquisition unit 541, the data acquisition unit 542, and the offset processing unit 57. The wear amount detection unit 543 detects the amount of wear of the bearings 32 and 33 in the thrust direction, based on a difference between the combined signal C2C4 of the pair of detection coils C2 and C4 and the combined signal C6C8 of another pair of detection coils C6 and C8. The frequency acquisition unit 541 acquires the driving frequency, based on the pulse signal. The data acquisition unit 542 acquires the adjustment data corresponding to the driving frequency, based on the acquired driving frequency. The offset processing unit 57 executes the offset processing to the combined signal C2C4 in such a way that the difference between the combined signal C2C4 and the combined signal C6C8 indicates the amount of wear corresponding to the driving frequency, based on the acquired adjustment data. According to this configuration, even though the driving frequency is changed when the present device 5 starts to operate or is in operation, the present device 5 is able to automatically acquire the driving frequency and the adjustment data and execute the offset processing depending on the driving frequency. As a result, even though the driving frequency is changed by the flow rate control with the inverter, the present device 5 is able to maintain the detection accuracy without manual operation for the device and monitor the wear state of the bearings 32 and 33. That is, the present device 5 is able to handle the flow rate control with the inverter.

According to the embodiment described above, the frequency acquisition unit 541 acquires the driving frequency, based on the state signal (the pulse signal) acquired in order to detect the state (the rotating direction) of the rotor 36 with respect to the stator 37. According to this configuration, the present device 5 is able to acquire the driving frequency without using a special signal, wiring, or a component for acquiring the driving frequency. As a result, the present device 5 is able to be easily implemented without changing the physical configuration in existing devices.

According to the embodiment described above, the present device 5 includes the pulse signal generation unit 52 and the pulse counter 540. The pulse signal generation unit 52 is connected to the three-phase AC power supply for the motor unit 3between the first phase (U) line and the second phase (V) line and between the second phase line and the third phase (W) line and generates the pulse signal corresponding to each voltage across the lines between the first phase and the second phase and between the second phase and the third phase. The pulse counter 540 counts the number of pulses of the pulse signal per predetermined unit time. The frequency acquisition unit 541 acquires the driving frequency, based on the number of pulses of the pulse signal. According to this configuration, the present device 5 is able to acquire the driving frequency by diverting the pulse signal used for detecting the rotating direction of the rotor 36 to acquire the driving frequency without using a special signal, wiring, or a component for acquiring the driving frequency. The present device 5 is able to be easily implemented by using the present program and causing a processor of the existing device that employs the same rotating direction detection method as the present device 5 to function as the pulse counter 540 and the frequency acquisition unit 541 without changing the physical configuration in an existing device.

According to the embodiment described above, the present device 5 includes the storage 55 that stores the driving frequency and the adjustment data corresponding to the driving frequency in association with each other for each driving frequency. The data acquisition unit 542 acquires, from the storage 55, the adjustment data corresponding to the driving frequency, based on the driving frequency. According to this configuration, the accurate adjustment data corresponding to the driving frequency is measured in advance and stored in the storage 55. Thus, the present device 5 is able to easily acquire the accurate adjustment data corresponding to the driving frequency only by acquiring the driving frequency. As a result, even though the driving frequency is changed by the flow rate control with the inverter, the present device 5 is able to maintain the detection accuracy without manual operation for the device and accurately monitor the wear state of the bearings 32 and 33.

According to the embodiment described above, the offset voltage generation circuit 57b generates the offset voltage, based on the offset information (the adjustment data), and the arithmetic circuit 57c executes the offset processing by using the offset voltage. According to this configuration, the present device 5 is able to easily generate one offset voltage corresponding to the driving frequency and is able to execute stable offset processing.

### Motor Bearing Wear Monitoring Device (2)

Next, another embodiment (hereinafter referred to as "second embodiment") of the motor bearing wear monitoring device according to the present invention will be described with a focus on differences from the previously described embodiment (hereinafter referred to as "first embodiment"). **In** the second embodiment, the configuration and the method for acquiring the driving frequency are different from those in the first embodiment. **In** the following description, components in common with the first embodiment are indicated with the same reference signs, and the description thereof will be omitted.

### Configuration of Motor Bearing Wear Monitoring Device (2)

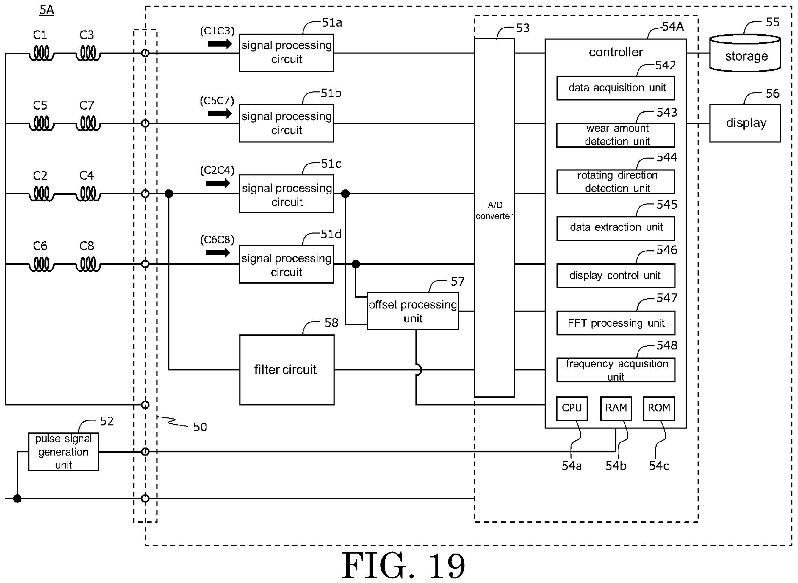

Fig. 19 is a functional block diagram illustrating the another embodiment (the second embodiment) of the present device.

A present device 5A includes the eight detection coils C1 to C8, the connection 50, the signal processing circuits 51a to 51d, the pulse signal generation unit 52, the A/D converter 53, a controller 54A, the storage 55, the display 56, the offset processing unit 57, and a filter circuit 58.

The controller 54A controls the operation of the whole present device 5A. The controller 54A includes the CPU 54a, the RAM 54b, and the ROM 54c, for example. The controller 54A includes the data acquisition unit 542, the wear amount detection unit 543, the rotating direction detection unit 544, the data extraction unit 545, the display control unit 546, an FFT processing unit 547, and a frequency acquisition unit 548.

In the controller 54A, the present program operates, and the present program cooperates with the hardware resources of the present device 5A and achieves each method described later. By causing the processor (the CPU 54a) included in the controller 54A to execute the present program, the present program enables the processor to function as the data acquisition unit 542, the wear amount detection unit 543, the rotating direction detection unit 544, the data extraction unit 545, the display control unit 546, the FFT processing unit 547, and the frequency acquisition unit 548 and enables the processor to execute the present method.

The FFT processing unit 547 generates a frequency spectrum of the combined signal C2C4 by executing Fast Fourier Transform processing (FFT processing) to the combined signal C2C4 of the pair of detection coils C2 and C4. A specific operation of the FFT processing unit 547 will be described later. The displacement of the rotor 36 is an example of a state of the rotor 36 with respect to the stator 37 in the present invention, and the combined signal C2C4, i.e., the detection signal, is an example of the state signal in the present invention.

The frequency acquisition unit 548 acquires the driving frequency for the motor unit 3, based on the state signal. A specific operation of the frequency acquisition unit 548 will be described later.

The filter circuit 58 executes filtering processing to the combined signal C2C4 and removes noise in the high-frequency band from the combined signal C2C4. The filter circuit 58 includes a low-pass filter with a cutoff frequency of 10 kHz, for example. The filter circuit 58 is connected in parallel to the signal processing circuits 51c and 51d and is connected to the A/D converter 53.

### Operation of Canned Motor Pump (Motor Bearing Wear Monitoring Device (2))

Next, operations of the pump 1 will be described below with a focus on operations of the present device 5A. In the following description, Figs. 1 to 10 and Fig. 19 will be referred to as appropriate.

When the pump 1 is in operation, the present device 5A executes frequency acquisition processing (S5) instead of the frequency acquisition processing (S1) in the first embodiment. That is, the present device 5A executes the wear amount detection processing (S3), the rotating direction detection processing (S4), and the frequency acquisition processing (S5) at all times.

### Frequency Acquisition Processing

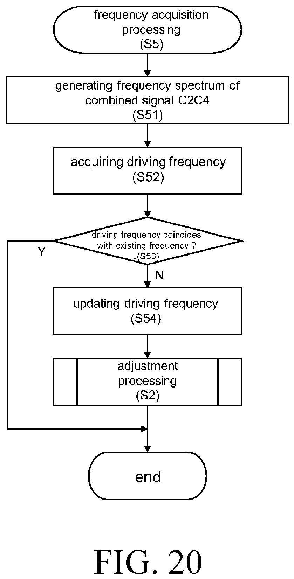

Fig. 20 is a flowchart illustrating an example of the frequency acquisition processing (S5).

The "frequency acquisition processing (S5)" is processing for generating the frequency spectrum of the combined signal C2C4 and acquiring the driving frequency, based on the frequency spectrum.

The combined signal C2C4 is input to the controller 54 (the FFT processing unit 547) via the signal processing circuits 51c and 51d, the filter circuit 58, and the A/D converter 53.

The FFT processing unit 547 executes the FFT processing to a predetermined sampling period of the combined signal C2C4 after noise removal and digital conversion and generates a frequency spectrum of the combined signal C2C4 (S51).

Then, the frequency acquisition unit 548 acquires a driving frequency, based on the frequency spectrum (S52). Specifically, the frequency acquisition unit 548 executes the filtering processing on the frequency spectrum and detects a peak of the fundamental component of the driving frequency, thereby acquiring the driving frequency. **In** other words, the frequency acquisition unit 548 acquires the driving frequency, based on the fundamental component. As described above, the harmonic components cancel each other out in the combined signal C2C4, and thus the combined signal C2C4 mainly includes the fundamental component. Thus, the frequency spectrum of the combined signal C2C4 includes the peak of the fundamental component except for noise components. The frequency of a commercial power supply in Japan is 50 Hz or 60 Hz, and even though the operation of the pump 1 is under inverter control, the driving frequency falls within a range of approximately 30 Hz to 120 Hz (mainly 40 Hz to 60 Hz). Thus, the filtering processing is executed by applying a low-pass filter with a cutoff frequency of 120 Hz to the frequency spectrum and detecting the peak of the fundamental component, for example.

Then, the frequency acquisition unit 548 compares the acquired driving frequency with the existing frequency stored in the RAM 54b (S53).

When the acquired driving frequency coincides with the existing frequency ("Y" in S53), the present device 5A ends the driving frequency acquisition processing (S5).

**In** contrast, when the acquired driving frequency and the existing frequency do not coincide with each other ("N" in S53), the frequency acquisition unit 548 updates the existing frequency stored in the RAM 54b to the acquired driving frequency (S54). Then, the present device 5A executes the adjustment processing (S2).

Note that, immediately after the present device 5A is turn on, the RAM 54b does not store the existing frequency. **In** this case, the present device 5A executes the adjustment processing (S2).

**In** this way, the present device 5A also diverts the combined signal C2C4 used to detect the displacement of the rotor 36 in the thrust direction to acquire the driving frequency. That is, the present device 5A does not require a special signal for acquiring the driving frequency. The difference in the physical configuration between the present device 5A and the present device 5 in the first embodiment is only the presence or absence of the filter circuit 58 and the required processor processing capability. Thus, the present device 5A is able to be implemented only by replacing or improving the circuit board and changing the control program in the present device 5. The replacement or improvement of the circuit board hardly affects the explosion-proof structure. Thus, the present device 5A is able to be implemented with only a small change in the physical configuration and a change in the control program without substantially affecting the explosion-proof structure in the existing device. That is, the present invention is applicable to an existing device having an explosion-proof structure by adding the filter circuit or causing a program to execute the filtering processing without changing the explosion-proof structure.

Note that, in the present invention, the present device 5A may acquire the driving frequency, based on the combined signal C6C8. **In** this case, the combined signal C6C8 is an example of the state signal in the present invention.

**In** the present invention, the present device 5Amay acquire the driving frequency, based on the combined signal C1C3. **In** this case, since the frequency spectrum of the combined signal C1C3 includes a peak of the harmonic component, the frequency acquisition unit 548 executes the filtering processing on the frequency spectrum, detects the peak of the harmonic component of the driving frequency, and acquires the driving frequency by dividing the frequency corresponding to the peak by the number of the rotor bars 36a. **In** this case, the filtering processing is executed by applying a band-pass filter with a cutoff frequency of 800 Hz to 3.4 kHz, for example. This configuration also enables acquisition of the number of revolutions of the motor unit 3. The combined signal C1C3 is an example of the state signal in the present invention.

**In** the present invention, the present device 5Amay acquire the driving frequency, based on the combined signal C5C7. **In** this case, the combined signal C5C7 is an example of the state signal in the present invention.

**In** the present invention, the present device 5Amay acquire the driving frequency, based on the combined signals C2C4 and C6C8 or the combined signals C1C3 and C5C7. **In** this case, the present device 5A may include a function of notifying an abnormality (e.g., an abnormality of the stator 37, etc.,) by comparing the acquired two driving frequencies and determining the difference.

In the present invention, the controller 54A may function as the filter circuit 58.

In the present invention, the present device 5A need not execute the filtering processing to the combined signal C2C4 with the filter circuit 58. In this case, high-frequency noise components are included in the FFT processing, and the noise components can be removed by the filtering processing in the frequency acquisition processing (S5). In this configuration, the filter circuit 58 is not required.

### Conclusion (2)

According to the embodiment described above, the present device 5A includes the wear amount detection unit 543, the frequency acquisition unit 548, the data acquisition unit 542, and the offset processing unit 57. The frequency acquisition unit 548 acquires the driving frequency, based on the frequency spectrum of the combined signal C2C4. The data acquisition unit 542 acquires the adjustment data corresponding to the driving frequency, based on the acquired driving frequency. The offset processing unit 57 executes the offset processing to the combined signal C2C4 in such a way that the difference between the combined signal C2C4 and the combined signal C6C8 indicates the amount of wear corresponding to the driving frequency, based on the acquired adjustment data. According to this configuration, even though the driving frequency of the driving power source is changed when the pump 1 starts to operate or is in operation, the present device 5A is able to automatically acquire the driving frequency and the adjustment data and execute the offset processing depending on the driving frequency. As a result, even though the driving frequency is changed by the flow rate control with the inverter, the present device 5A is able to maintain the detection accuracy without manual operation for the device and monitor the wear state of the bearings 32 and 33. That is, the present device 5A is able to handle the flow rate control with the inverter.

According to the embodiment described above, the frequency acquisition unit 548 acquires the driving frequency, based on the state signal (the combined signal C2C4) acquired in order to detect the state (the displacement) of the rotor 36 with respect to the stator 37. According to this configuration, the present device 5A is able to acquire the driving frequency without using a special signal for acquiring the driving frequency.

According to the embodiment described above, the frequency acquisition unit 548 acquires the driving frequency, based on the fundamental component included in the combined signal C2C4. As described above, the frequency of the fundamental component is the same as the driving frequency. According to this configuration, the present device 5A is able to acquire the accurate driving frequency by diverting the combined signal C2C4 used for detecting the displacement of the rotor 36 to acquire the driving frequency without using a special signal for acquiring the driving frequency.

According to the embodiment described above, the frequency acquisition unit 548 executes the FFT processing to the combined signal C2C4 from the pair of detection coils C2 and C4, thereby generating the frequency spectrum of the combined signal C2C4 and acquiring the driving frequency, based on the frequency spectrum. According to this configuration, the present device 5A is able to easily acquire the accurate driving frequency by using the configuration for executing the FFT processing that is not normally used in the technical field of the motor bearing wear monitoring device. As a result, the present device 5A is able to be implemented with only a small change in the physical configuration and a change in the control program in the existing device.

### Motor Bearing Wear Monitoring Device (3)

Next, another embodiment of the motor bearing wear monitoring device according to the present invention (hereinafter referred to as "third embodiment") will be described with a focus on differences from the first and second embodiments described above. In the third embodiment, the configuration and the method for acquiring the adjustment data are different from those in the first and second embodiments. In the following description, components in common with the first embodiment are indicated with the same reference signs, and the description thereof will be omitted.

### Configuration of Motor Bearing Wear Monitoring Device (3)

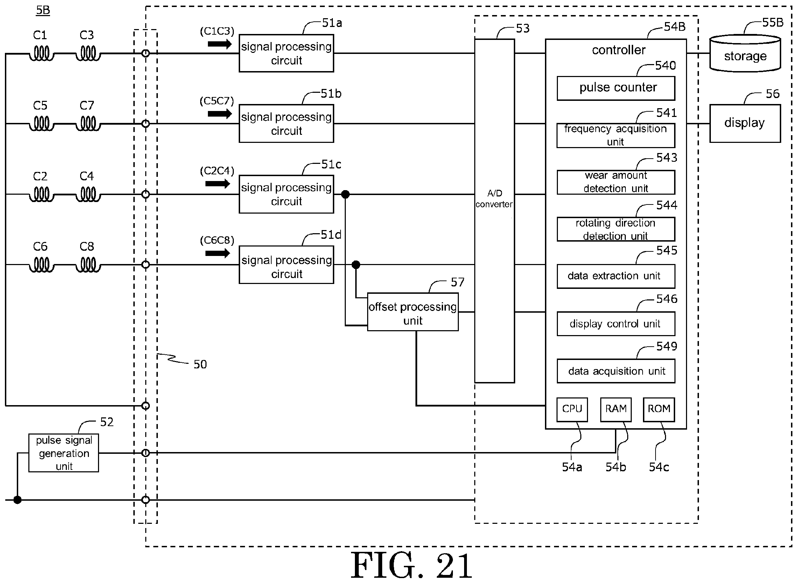

Fig. 21 is a functional block diagram illustrating still another embodiment (the third embodiment) of the present device.

The present device 5B includes the eight detection coils C1 to C8, the connection 50, the signal processing circuits 51a to 51d, the pulse signal generation unit 52, the A/D converter 53, a controller 54B, a storage 55B, the display 56, and the offset processing unit 57.

The controller 54B controls the operation of the whole present device 5B. The controller 54B includes the CPU54a, the RAM54b, and the ROM54c, for example. The controller 54B includes the pulse counter 540, the frequency acquisition unit 541, the wear amount detection unit 543, the rotating direction detection unit 544, the data extraction unit 545, the display control unit 546, and a data acquisition unit 549.

In the controller 54B, the present program operates, and the present program cooperates with the hardware resources of the present device 5B and achieves each method described later. By causing the processor (the CPU 54a) included in the controller 54B to execute the present program, the present program enables the processor to function as the pulse counter 540, the frequency acquisition unit 541, the wear amount detection unit 543, the rotating direction detection unit 544, the data extraction unit 545, the display control unit 546, and the data acquisition unit 549 and enables the processor to execute the present method.

The data acquisition unit 549 acquires the adjustment data corresponding to the driving frequency, based on the driving frequency acquired by the frequency acquisition unit 541, and a function and a constant, both described later. A specific operation of the data acquisition unit 549 will be described later.

The storage 55B stores information necessary for the operation of the present device 5B such as the function, the constant, reference adjustment data, etc.,. The storage 55 is a non-volatile memory such as EEPROM or a flash memory, for example.

The "function" is a linear function indicating a relation between each parameter included in the adjustment data and the driving frequency. The inventors of the present invention have found that, among the parameters, a variable parameter varies substantially linearly with respect to the fluctuation of the driving frequency. As a result, an appropriate constant is set for each parameter in the present embodiment, thereby enabling automatic calculation of each variable parameter corresponding to the driving frequency. The function is represented by "Y=aX" in which "Y" is a variable parameter, "X" is a driving frequency, and "a" is a constant, for example.

The "constant" corresponds to "a" of the above-described function and is calculated in advance for each variable parameter at a predetermined reference driving frequency (e.g., 60 Hz) prior to shipping, for example. That is, the constant is calculated for each variable parameter. In the present embodiment, the variable parameter with a calculated constant includes at least the variable parameter necessary for detecting the amount of wear (e.g., the offset information, the difference value at the maximum front position, and the difference value at the maximum rear position).

Note that, in the present invention, the variable parameter with the calculated constant is not limited to the variable parameter in the present embodiment. That is, the constant may be calculated for all the variable parameters or for only the variable parameters required to detect the amount of wear in order to reduce processing loads, for example.

In the present invention, the function is not limited to the linear function of "Y=aX". That is, the function may be a linear function of "Y=aX+b" in which "Y" is a variable parameter, "X" is a driving frequency, "a" is a constant, and "b" is an intercept, for example. In this case, the constants "a" and the intercept "b" are calculated in advance for each variable parameter at two reference driving frequencies (e.g., 40 Hz and 60 Hz). In this configuration, the acquisition of the reference adjustment data, the constant, and the intercept at the two reference driving frequencies is required, but the calculation accuracy of the variable parameter is improved over that calculated by "Y=aX".

In the present invention, the reference driving frequency may be selected according to an operating environment of the pump 1 and is not limited to 60 Hz.

The "reference adjustment data" is adjustment data corresponding to the reference driving frequency. The reference adjustment data includes a variable parameter, a constant corresponding to the variable parameter, and an invariant parameter, for example.

### Operation of Pump (Motor Bearing Wear Monitoring Device (3))

Next, operations of the pump 1 will be described below with a focus on operations of the present device 5B. In the following description, Figs. 1 to 10 and Fig. 21 will be referred to as appropriate.

When the pump 1 is in operation, the present device 5B executes the frequency acquisition processing (S1), the wear amount detection processing (S3), and the rotating direction detection processing (S4) at all times. In the present embodiment, the present device 5B executes adjustment processing (S6) instead of the adjustment processing (S2) of the first and second embodiments.

Herein, when the present device 5B is activated, the controller 54B retrieves the function and the reference adjustment data from the storage 55B and stores the function and the reference adjustment data in the RMA 54b.

### Adjustment Processing

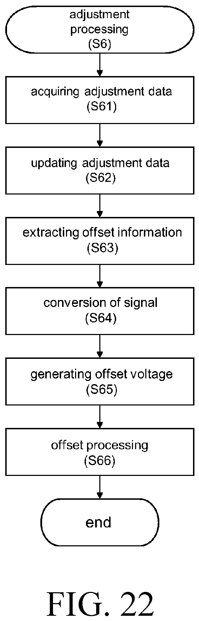

Fig. 22 is a flowchart illustrating an example of the adjustment processing (S6).

The "adjustment processing (S6)" is processing for acquiring the adjustment data (the variable parameter) corresponding to the driving frequency, and updating existing data and executing the offset processing, based on the acquired adjustment data.

First, the data acquisition unit 549 retrieves the driving frequency, the function, and the constant for each required variable parameter from the RAM 54b and calculates each variable parameter corresponding to the driving frequency, thereby acquiring each variable parameter corresponding to the driving frequency, i.e., the adjustment data (S61).

Then, the data acquisition unit 549 updates the variable parameter in the existing adjustment data stored in the RAM 54b to the acquired variable parameter (S62).

Then, the data extraction unit 545 retrieves (extracts) the offset information from the RAM 54b (S63). The offset information is output to the offset processing unit 57.

**In** the offset processing unit 57, conversion of the signal (S64), generation of the offset voltage (S65), and offset processing (S66) are executed. The processing S64 to S66 is common to the processing S24 to S26 of the first embodiment, and thus the details thereof will be omitted.

**In** this way, the present device 5B is able to easily acquire the adjustment data corresponding to all the driving frequencies by calculating the variable parameter by using the function and the constant. **In** the present device 5B, the prior acquisition of the adjustment data for each driving frequency as in the first and second embodiments is not required. The processing load required for the calculation is reduced by narrowing down the variable parameters to be calculated. Thus, the present invention is also able to implement the calculation with a processor of an existing device. As a result, the present device 5B is able to be implemented by only changing the control program (executing the present program) in the existing device without changing the physical configuration.

### Conclusion (3)

According to the embodiment described above, the present device 5B includes the storage 55B that stores the function and the constant used for calculating the adjustment data corresponding to the driving frequency. The data acquisition unit 549 acquires the adjustment data (the variable parameter) corresponding to the driving frequency, based on the driving frequency, the function, and the constant. According to this configuration, the prior acquisition of the adjustment data for each driving frequency as in the first and second embodiments is not required, and the present device 5B is able to acquire the adjustment data corresponding to the fluctuation of all the driving frequencies by only acquiring the reference adjustment data and the constant at one driving frequency. As a result, even though the driving frequency is changed by the flow rate control with the inverter, the present device 5B is able to maintain the detection accuracy without manual operation for the device and accurately monitor the wear state of the bearings 32 and 33. That is, the present device 5B is able to handle the flow rate control with the inverter.

Note that, in the present invention, the present device 5B may acquire the driving frequency by the FFT processing as in the second embodiment.

### Other Embodiments

Note that, in the embodiments described above, the number of the detection coils C1 to C8 is not limited to "eight" as long as the present invention can be implemented.

In the first and second embodiments described above, the present device (5, 5A) may acquire the adjustment data from an external handy device via a communication line such as an infrared ray, instead of the storage 55.

In the embodiments described above, the controller (54, 54A, 54B) may include a processor such as a digital signal processor (DSP), a micro processing unit (MPU), or the like, instead of the CPU 54a.

In the embodiments described above, the present method is executed by the controller (5, 5A, 5B). Alternatively, a part of the present method (e.g., the amount of wear detection processing (S1)) may be executed by an external device (e.g., a computer, etc.,) connected to the present device (5, 5A, 5B).

### Aspects of the Present Invention

Next, aspects of the present invention conceived from the embodiments described above will be described below with reference to the terms and reference signs described in the embodiments.

A first aspect of the present invention is a motor bearing wear monitoring device (e.g., the present devices 5, 5A, and 5B) for monitoring a wear state of bearings (e.g., the bearings 32 and 33) that support a rotating shaft (e.g., the rotating shaft 31) of a rotor (e.g., the rotor 36) by detecting a change in magnetic flux corresponding to a mechanical position change of the rotor with respect to a stator (e.g., the stator 37) of a motor (e.g., the motor unit 3) in a canned motor pump (e.g., the canned motor pump 1) by using a plurality of detection coils (e.g., the detection coils C1 to C8) attached to the stator, in which each of the plurality of detection coils outputs a detection signal indicating the change in the magnetic flux, and the plurality of detection coils includes a plurality of thrust detection coils (e.g., the detection coils C2, C4, C6, and C8) that output the detection signals indicating the change in the magnetic flux in a thrust direction of the rotating shaft, and the motor bearing wear monitoring device includes: a wear amount detection unit (e.g., the wear amount detection unit 543) that detects an amount of wear of the bearings in the thrust direction, based on a difference between a combined signal (e.g., the combined signal C2C4) obtained by combining each detection signal output from a pair of the thrust detection coils and a combined signal (e.g., the combined signal C6C8) obtained by combining each detection signal output from another pair of the thrust detection coils; a frequency acquisition unit (e.g., the frequency acquisition units 541 and 548) that acquires a driving frequency of the motor; a data acquisition unit (e.g., the data acquisition units 542 and 549) that acquires adjustment data corresponding to the driving frequency, based on the acquired driving frequency; and an offset processing unit (e.g., the offset processing unit 57) that executes offset processing to the combined signal used to calculate the difference, based on the acquired adjustment data, in such a way that the difference indicates the amount of wear corresponding to the driving frequency. According to this configuration, even though the driving frequency is changed when the device starts to operate or is in operation, the present device is able to automatically acquire the driving frequency and the adjustment data and execute the offset processing depending on the driving frequency. That is, the present device is able to maintain the detection accuracy without manual operation for the device even though the driving frequency is changed.

A second aspect of the present invention is the motor bearing wear monitoring device in the first aspect, in which the frequency acquisition unit acquires the driving frequency, based on a state signal (e.g., the pulse signal, the detection signal) acquired in order to detect a state (e.g., rotating direction, position change) of the rotor with respect to the stator. According to this configuration, the present device is able to acquire the driving frequency without using a special signal, wiring, or a component for acquiring the driving frequency.

A third aspect of the present invention is the motor bearing wear monitoring device (e.g., the present devices 5 and 5B) in the second aspect further including a pulse signal generation unit (e.g., the pulse signal generation unit 52) that is connected to a three-phase alternating current power supply for the motor between a first phase line and a second phase line and between the second phase line and a third phase line of the three-phase alternating current power supply for the motor and generates a pulse signal corresponding to each voltage across the lines, the pulse signal used for detecting a rotating direction of the rotating shaft, and a pulse counter (e.g., the pulse counter 540) that counts the number of pulses of the pulse signal per predetermined unit time, in which the frequency acquisition unit (e.g., the frequency acquisition unit 541) acquires the driving frequency, based on the number of pulses of the pulse signal that is the state signal. According to this configuration, the present device is able to be easily implemented without changing the physical configuration in an existing device.

A fourth aspect of the present invention is the motor bearing wear monitoring device (e.g., the present devices 5A and 5B) in the second aspect, in which the detection signal includes a fundamental component based on the driving frequency and a harmonic component based on rotation of the rotor, and the frequency acquisition unit (e.g., the frequency acquisition unit 548) acquires the driving frequency, based on the fundamental component and/or the harmonic component of the detection signal that is the state signal. According to this configuration, the present device is able to acquire the accurate driving frequency without using a special signal for acquiring the driving frequency.

A fifth aspect of the present invention is the motor bearing wear monitoring device in the fourth aspect further including an FFT processing unit (e.g., the FFT processing unit 547) that generates a frequency spectrum of the combined signal by executing Fast Fourier transform processing to the combined signal (e.g., the combined signal C2C4) obtained by combining each detection signal output from each of the pair of detection coils among the plurality of detection coils, in which the frequency acquisition unit extracts the fundamental component or the harmonic component, based on the frequency spectrum. According to this configuration, the present device is able to easily acquire the accurate driving frequency by using the configuration for executing the FFT processing that is not normally used in the technical field of the motor bearing wear monitoring device.

A sixth aspect of the present invention is the motor bearing wear monitoring device (e.g., the present devices 5 and 5A) in any one of the first to the fifth aspects further including a storage (e.g., the storage 55) that stores the driving frequency and the adjustment data corresponding to the driving frequency in association with each other for each driving frequency, in which the data acquisition unit (e.g., the data acquisition unit 542) acquires the adjustment data corresponding to the driving frequency from the storage, based on the driving frequency. According to this configuration, the present device is able to easily acquire the accurate adjustment data corresponding to the driving frequency only by acquiring the driving frequency.

A seventh aspect of the present invention is the motor bearing wear monitoring device (e.g., the present device 5B) in any one of the first to the fifth aspects further including a storage (e.g., 55B) that stores a function and a constant used for calculating the adjustment data corresponding to the driving frequency, in which the data acquisition unit (e.g., the data acquisition unit 549) acquires the adjustment data corresponding to the driving frequency, based on the driving frequency, the function, and the constant. According to this configuration, the present device is able to acquire the adjustment data corresponding to the fluctuation of all the driving frequencies by only acquiring reference adjustment data and the constant at one driving frequency.

An eighth aspect of the present invention is the motor bearing wear monitoring device in the first aspect, in which the offset processing unit generates an offset signal (e.g., an offset voltage), based on the adjustment data, and executes the offset processing by using the offset signal. According to this configuration, the present device is able to easily generate the offset voltage, based on the offset information corresponding to the driving frequency, and execute the offset processing.

A ninth aspect of the present invention is a method (e.g., the frequency acquisition processing (S1, S5), the adjustment processing (S2, S6), and the wear amount detection processing (S3)) for adjusting a motor bearing wear monitoring device that monitors a wear state of bearings that support a rotating shaft of a rotor by detecting a change in magnetic flux corresponding to a mechanical position change of the rotor with respect to a stator of a motor of a canned motor pump by using a plurality of detection coils attached to the stator, in which each of the plurality of detection coils outputs a detection signal indicating the change in the magnetic flux, and the plurality of detection coils include four thrust detection coils that output the detection signals indicating the change in the magnetic flux in a thrust direction of the rotating shaft, and the method for adjusting the motor bearing wear monitoring device includes: a wear amount detection step (e.g., the processing S31) of detecting an amount of wear of the bearings in the thrust direction, based on a difference between a combined signal obtained by combining each detection signal output from a pair of the thrust detection coils and a combined signal obtained by combining each detection signal output from another pair of the thrust detection coils; a frequency acquisition step (e.g., the processing S12, S52) of acquiring a driving frequency of the motor; a data acquisition step (e.g., the processing S22, S62) of acquiring adjustment data corresponding to the driving frequency, based on the acquired driving frequency; and an offset processing step (e.g., the processing S26, S66) of executing offset processing to the combined signal used to calculate the difference, based on the acquired adjustment data, in such a way that the difference indicates the amount of wear corresponding to the driving frequency. According to this configuration, even though the driving frequency is changed when the device starts to operate or is in operation, the present device is able to automatically acquire the driving frequency and the adjustment data and execute the offset processing depending on the driving frequency. That is, the present device is able to maintain the detection accuracy without manual operation for the device even though the driving frequency is changed.

A tenth aspect of the present invention is a program (e.g., the present program) executed by a processor included in a motor bearing wear monitoring device for monitoring a wear state of bearings that support a rotating shaft of a rotor by detecting a change in magnetic flux corresponding to a mechanical position change of the rotor with respect to a stator of a motor of a canned motor pump by using a plurality of detection coils attached to the stator, in which each of the plurality of detection coils outputs a detection signal indicating the change in the magnetic flux, and the plurality of detection coils include a plurality of thrust detection coils that output the detection signal indicating the change in the magnetic flux in a thrust direction of the rotating shaft, and the program causes the processor to function as a wear amount detection unit that detects an amount of wear of the bearings in the thrust direction, based on a difference between a combined signal obtained by combining each detection signal output from a pair of the thrust detection coils and a combined signal obtained by combining each detection signal output from another pair of the thrust detection coils; a frequency acquisition unit that acquires a driving frequency of the motor; a data acquisition unit that acquires adjustment data corresponding to the driving frequency, based on the acquired driving frequency; and a data extraction unit that extracts, from the adjustment data, offset information to be used for offset processing to be executed by the combined signals used to calculate the difference in such a way that the difference indicates the amount of wear corresponding to the driving frequency. According to this configuration, even though the driving frequency is changed when the device starts to operate or is in operation, the present device is able to automatically acquire the driving frequency and the adjustment data and execute the offset processing depending on the driving frequency. That is, the present device is able to maintain the detection accuracy without manual operation for the device even though the driving frequency is changed.

### [Reference Signs List]

1 Canned motor pump
3 Motor unit
31 Rotating shaft
32 Bearing
33 Bearing
36 Rotor
37 Stator
5 Motor bearing wear monitoring device
52 Pulse signal generation unit
540 Pulse counter
541 Frequency acquisition unit
542 Data acquisition unit
543 Wear amount detection unit
55 Storage
57 Offset processing unit
5A Motor bearing wear monitoring device
547 FFT processing unit
548 Frequency acquisition unit
5B Motor bearing wear monitoring device
549 Data acquisition unit
55B Storage
C1 to C8 Detection coil

## Claims

1. A motor bearing wear monitoring device for monitoring a wear state of bearings that support a rotating shaft of a rotor by detecting a change in magnetic flux corresponding to a mechanical position change of the rotor with respect to a stator of a motor of a canned motor pump by using a plurality of detection coils attached to the stator, wherein
each of the plurality of detection coils outputs a detection signal indicating the change in the magnetic flux, and
the plurality of detection coils includes a plurality of thrust detection coils that output the detection signals indicating the change in the magnetic flux in a thrust direction of the rotating shaft,
the motor bearing wear monitoring device comprising:
a wear amount detection unit configured to detect an amount of wear of the bearings in the thrust direction, based on a difference between a combined signal obtained by combining each detection signal output from a pair of the thrust detection coils and a combined signal obtained by combining each detection signal output from another pair of the thrust detection coils;
a frequency acquisition unit configured to acquire a driving frequency of the motor;
a data acquisition unit configured to acquire adjustment data corresponding to the driving frequency, based on the acquired driving frequency; and
an offset processing unit configured to execute offset processing to the combined signal used to calculate the difference, based on the acquired adjustment data, in such a way that the difference indicates the amount of wear corresponding to the driving frequency.

2. The motor bearing wear monitoring device according to Claim 1, wherein
the frequency acquisition unit acquires the driving frequency, based on a state signal acquired in order to detect a state of the rotor with respect to the stator.

3. The motor bearing wear monitoring device according to Claim 2 further comprising:
a pulse signal generation unit connected to a three-phase alternating current power supply for the motor between a first phase line and a second phase line and between the second phase line and a third phase line of the three-phase alternating current power supply for the motor and configured to generate a pulse signal corresponding to each voltage across the lines, the pulse signal used for detecting a rotating direction of the rotating shaft; and
a pulse counter configured to count the number of pulses of the pulse signal per predetermined unit time, wherein
the frequency acquisition unit acquires the driving frequency, based on the number of pulses of the pulse signal that is the state signal.

4. The motor bearing wear monitoring device according to Claim 2, wherein
the detection signal includes a fundamental component based on the driving frequency and a harmonic component based on rotation of the rotor, and
the frequency acquisition unit acquires the driving frequency, based on the fundamental component and/or the harmonic component of the detection signal that is the state signal.

5. The motor bearing wear monitoring device according to Claim 4 further comprising an FFT processing unit configured to generate a frequency spectrum of the combined signal by executing Fast Fourier transform processing to the combined signal obtained by combining each detection signal output from each of the pair of detection coils among the plurality of detection coils, wherein
the frequency acquisition unit extracts the fundamental component or the harmonic component, based on the frequency spectrum.

6. The motor bearing wear monitoring device according to any one of Claims 1 to 5 further comprising a storage configured to store the driving frequency and the adjustment data corresponding to the driving frequency in association with each other for each driving frequency, wherein
the data acquisition unit acquires the adjustment data corresponding to the driving frequency from the storage, based on the driving frequency.

7. The motor bearing wear monitoring device according to any one of Claims 1 to 5 further comprising a storage configured to store a function and a constant used for calculating the adjustment data corresponding to the driving frequency, wherein
the data acquisition unit acquires the adjustment data corresponding to the driving frequency, based on the driving frequency, the function, and the constant.

8. The motor bearing wear monitoring device according to Claim 1, wherein
the offset processing unit generates an offset signal, based on the adjustment data, and executes the offset processing by using the offset signal.

9. A method for adjusting a motor bearing wear monitoring device that monitors a wear state of bearings that support a rotating shaft of a rotor by detecting a change in magnetic flux corresponding to a mechanical position change of the rotor with respect to a stator of a motor of a canned motor pump by using a plurality of detection coils attached to the stator, wherein
each of the plurality of detection coils outputs a detection signal indicating the change in the magnetic flux, and
the plurality of detection coils includes a plurality of thrust detection coils that output the detection signals indicating the change in the magnetic flux in a thrust direction of the rotating shaft,
the method for adjusting the motor bearing wear monitoring device comprising:
a wear amount detection step of detecting an amount of wear of the bearings in the thrust direction, based on a difference between a combined signal obtained by combining each detection signal output from a pair of the thrust detection coils and a combined signal obtained by combining each detection signal output from another pair of the thrust detection coils;
a frequency acquisition step of acquiring a driving frequency of the motor;
a data acquisition step of acquiring adjustment data corresponding to the driving frequency, based on the acquired driving frequency; and
an offset processing step of executing offset processing to the combined signal used to calculate the difference, based on the acquired adjustment data, in such a way that the difference indicates the amount of wear corresponding to the driving frequency.

10. A program executed by a processor included in a motor bearing wear monitoring device for monitoring a wear state of bearings that support a rotating shaft of a rotor by detecting a change in magnetic flux corresponding to a mechanical position change of the rotor with respect to a stator of a motor of a canned motor pump by using a plurality of detection coils attached to the stator, wherein
each of the plurality of detection coils outputs a detection signal indicating the change in the magnetic flux, and
the plurality of detection coils includes a plurality of thrust detection coils that output the detection signal indicating the change in the magnetic flux in a thrust direction of the rotating shaft,
the program causes the processor to function as
a wear amount detection unit configured to detect an amount of wear of the bearings in the thrust direction, based on a difference between a combined signal obtained by combining each detection signal output from a pair of the thrust detection coils and a combined signal obtained by combining each detection signal output from another pair of the thrust detection coils;
a frequency acquisition unit configured to acquire a driving frequency of the motor;
a data acquisition unit configured to acquire adjustment data corresponding to the driving frequency, based on the acquired driving frequency; and
a data extraction unit configured to extract, from the adjustment data, offset information to be used for offset processing to be executed by the combined signals used to calculate the difference in such a way that the difference indicates the amount of wear corresponding to the driving frequency.
